# EUROPEAN PATENT APPLICATION

(11) **EP 4 614 308 A1**
(43) Date of publication of application: **10.09.2025**
(21) Application number: 23888946.3
(22) Date of filing: 13.10.2023
(51) Int. Cl.: G06F 3/16, G06F 3/04842, G06F 1/16, G06F 3/00, H04R 3/00, G02B 27/01, G06F 3/04847, G06F 3/0481

(54) **WEARABLE DEVICE FOR RECORDING AUDIO SIGNAL AND METHOD THEREOF**

(30) Priority: 09.11.2022 KR 20220148757; 30.11.2022 KR 20220164959
(71) Applicant: Samsung Electronics Co., Ltd., Suwon-si, Gyeonggi-do 16677 (KR)
(72) Inventor: LEE, Sanghun, Suwon-si, Gyeonggi-do 16677 (KR); KANG, Jinmo, Suwon-si, Gyeonggi-do 16677 (KR); KIM, Sungoh, Suwon-si, Gyeonggi-do 16677 (KR); KIM, Jihyun, Suwon-si, Gyeonggi-do 16677 (KR); YEOM, Donghyun, Suwon-si, Gyeonggi-do 16677 (KR); LEE, Gunhee, Suwon-si, Gyeonggi-do 16677 (KR)
(74) Representative: Walaski, Jan Filip
(86) International application number: PCT/KR2023/015779
(87) International publication number: WO 2024/101683

(57) **Abstract**

A processor of a wearable device according to an embodiment may broadcast, through a communication circuit, a signal including information for tracking an external object to which a virtual microphone is attached. The processor may obtain a first audio signal based on an attribute from the microphone and obtain at least one second audio signal from at least one external electronic device. The at least one second audio signal may be transmitted from the at least one external electronic device as a response to the signal. The processor may synthesize the first audio signal and the at least one second audio signal to obtain a third audio signal for the virtual microphone. The present document may relate to a metaverse service for strengthening the interconnectivity between a real object and a virtual object. For example, the metaverse service may be provided through a network based on fifth generation (5G) and/or sixth generation (6G).

## Description

### [Technical Field]

Various embodiments of the present disclosure relate to a wearable device for recording an audio signal and a method thereof.

### [Background Art]

In order to provide enhanced user experience, an electronic device providing an augmented reality (AR) service that displays information generated by a computer in connection with an external object in the real-world is being developed. The electronic device may be a wearable device capable of being worn by a user. For example, the electronic device may be AR glasses and/or a head-mounted device (HMD).

### [Disclosure]

### [Technical Solution]

According to an embodiment, a wearable device may comprise a camera, communication circuitry, a microphone, and a processor. The processor may be configured to receive an input for combining a virtual microphone to a virtual object adjacent to the wearable device. The processor may be configured to broadcast, via the communication circuitry, a signal including information to track the external object combined with the virtual microphone by the input. The processor may be configured to obtain, using a position of the external object identified based on frames obtained from the camera, a first audio signal from the microphone. The processor may be configured to obtain at least one second audio signal from at least one external electronic device through the communication circuitry. The at least one second audio signal may be transmitted from the at least one external electronic device as a response to the signal. The processor may be configured to obtain, by synthesizing the first audio signal and the at least one second audio signal using the position of the external object, a third audio signal with respect to the virtual microphone.

According to an embodiment, a method of a wearable device may comprise receiving an input for combining a virtual microphone to a virtual object adjacent to the wearable device. The method may comprise broadcasting, via communication circuitry of the wearable device, a signal including information to track the external object combined with the virtual microphone by the input. The method may comprise obtaining, using a position of the external object identified based on frames obtained from a camera of the wearable device, a first audio signal from a microphone of the wearable device. The method may comprise obtaining at least one second audio signal from at least one external electronic device through the communication circuitry. The at least one second audio signal may be transmitted from the at least one external electronic device as a response to the signal. The method may comprise obtaining, by synthesizing the first audio signal and the at least one second audio signal using the position of the external object, a third audio signal with respect to the virtual microphone.

According to an embodiment, a wearable device may comprise communication circuitry, a microphone, a display, a camera, and a processor. The processor may be configured to identify, based on receiving a first signal broadcasted from an external electronic device through the communication circuitry, information assigned to a virtual microphone. The processor may be configured to display, based on identifying a position of the virtual microphone indicated by the information in an external space including the wearable device using the camera, a visual object for recording based on the virtual microphone in the display. The processor may be configured to obtain, in response to an input associated with the visual object, an audio signal outputted from the microphone. The processor may be configured to transmit, to the external electronic device through the communication circuitry, a second signal including the audio signal and the identified position as a response to the first signal.

According to an embodiment, a method of a wearable device may comprise identifying, based on receiving a first signal broadcasted from an external electronic device through communication circuitry of the wearable device, information assigned to a virtual microphone. The method may comprise displaying, based on identifying a position of the virtual microphone indicated by the information in an external space including the wearable device using a camera of the wearable device, a visual object for recording based on the virtual microphone in a display of the wearable device. The method may comprise obtaining, in response to an input associated with the visual object, an audio signal outputted from a microphone of the wearable device. The method may comprise transmitting, to the external electronic device through the communication circuitry, a second signal including the audio signal and the identified position as a response to the first signal.

### [Description of the Drawings]

FIG. 1 illustrates an example of an operation in which a wearable device obtains an audio signal based on a virtual microphone, according to an embodiment.
FIGS. 2A to 2B illustrate exemplary block diagrams of a wearable device according to an embodiment.
FIG. 3A illustrates an example of a perspective view of a wearable device according to an embodiment.
FIG. 3B illustrates an example of one or more hardware disposed in a wearable device according to an embodiment.
FIGS. 4A to 4B illustrate an example of an exterior of a wearable device according to an embodiment.
FIGS. 5A to 5B illustrate an example of an operation in which the wearable device 101 identifies an input indicating to add a virtual microphone, according to an embodiment.
FIG. 6 illustrates an example of an operation in which a wearable device visualizes a virtual microphone, according to an embodiment.
FIG. 7 illustrates an example of an operation in which a plurality of wearable devices obtain audio signals based on a virtual microphone, according to an embodiment.
FIG. 8 illustrates an example of an operation in which a plurality of wearable devices obtain audio signals based on a virtual microphone, according to an embodiment.
FIG. 9 illustrates an example of a signal flowchart between a plurality of wearable devices, according to an embodiment.
FIG. 10 illustrates an example of a flowchart of a wearable device according to an embodiment.
FIG. 11 illustrates an example of a flowchart of a wearable device according to an embodiment.
FIG. 12 is a block diagram of an electronic device in a network environment according to an embodiment.
FIG. 13 is an exemplary diagram of a network environment associated with a metaverse service.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

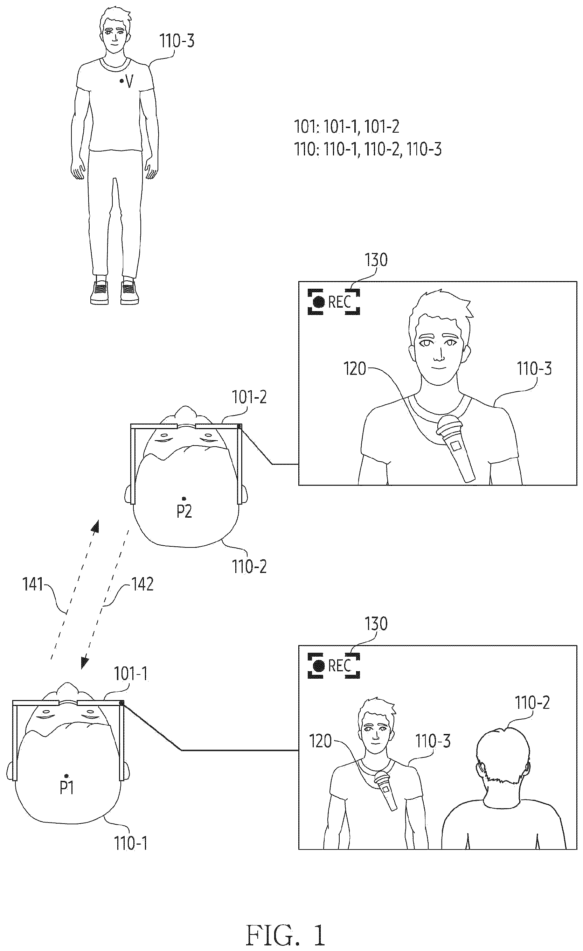

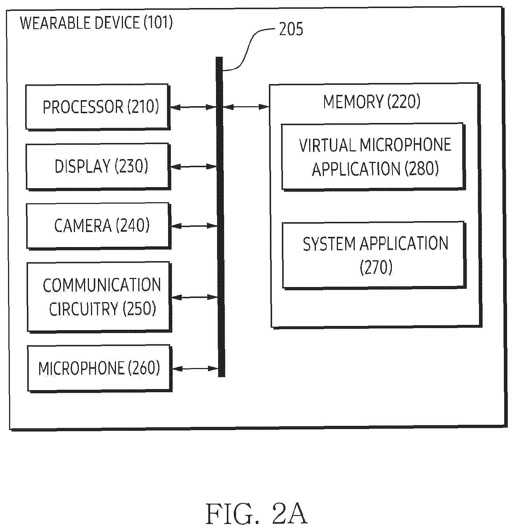

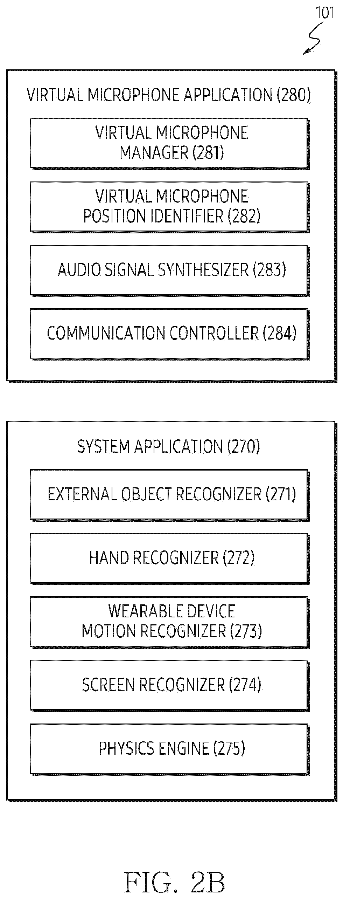

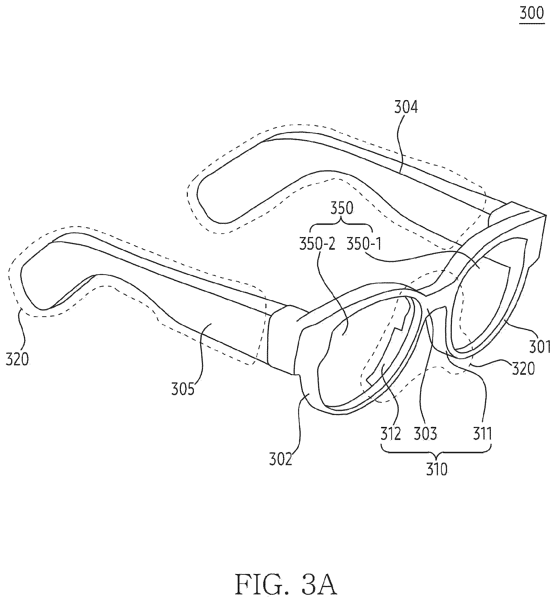

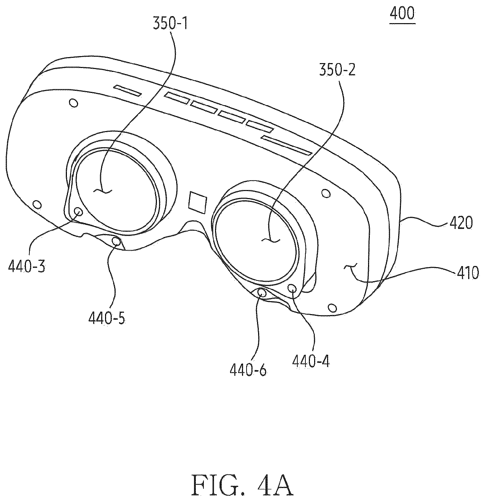

FIG. 1 illustrates an example of an operation in which a wearable device 101 obtains an audio signal based on a virtual microphone according to an embodiment. Referring to FIG. 1, the wearable device 101 according to an embodiment may include a head-mounted display (HMD) wearable on the head of a user 110. Although an external appearance of the wearable device 101 having a form of glasses is illustrated, the embodiment is not limited thereto. An example of a structure of the wearable device 101 wearable on the user 110's head will be described with reference to FIGS. 3A to 3B and/or 4A to 4B. One or more hardware included in the wearable device 101 is exemplarily described with reference to FIGS. 2A and 2B.

According to an embodiment, the wearable device 101 may execute a function associated with augmented reality (AR) and/or mixed reality (MR). Referring to FIG. 1, in a state that the user 110 is wearing the wearable device 101, the wearable device 101 may include at least one lens disposed adjacent to the user 110's eyes. The wearable device 101 may combine ambient light passing through the lens with light emitted from a display of the wearable device 101. A display area of the display may be formed in a lens through which ambient light passes. Since the wearable device 101 combines the ambient light and the light emitted from the display, the user 110 may see an image in which a real object recognized by the ambient light and a virtual object formed by the light emitted from the display are mixed.

According to an embodiment, the wearable device 101 may execute a function related to a video see-through (VST) and/or virtual reality (VR). Referring to FIG. 1, in a state that the user 110 is wearing the wearable device 101, the wearable device 101 may include a housing covering the user 110's eyes. In the state, the wearable device 101 may include a display disposed on a first surface facing the eye. The wearable device 101 may include a camera disposed on a second surface opposite to the first surface. Using the camera, the wearable device 101 may obtain frames including ambient light. The wearable device 101 may output the frames in a display disposed on the first surface so that the user 110 recognizes the ambient light through the display. A display area of the display disposed on the first surface may be formed by one or more pixels included in the display. The wearable device 101 may synthesize a virtual object in frames outputted through the display so that the user 110 recognizes the virtual object together with a real object recognized by ambient light.

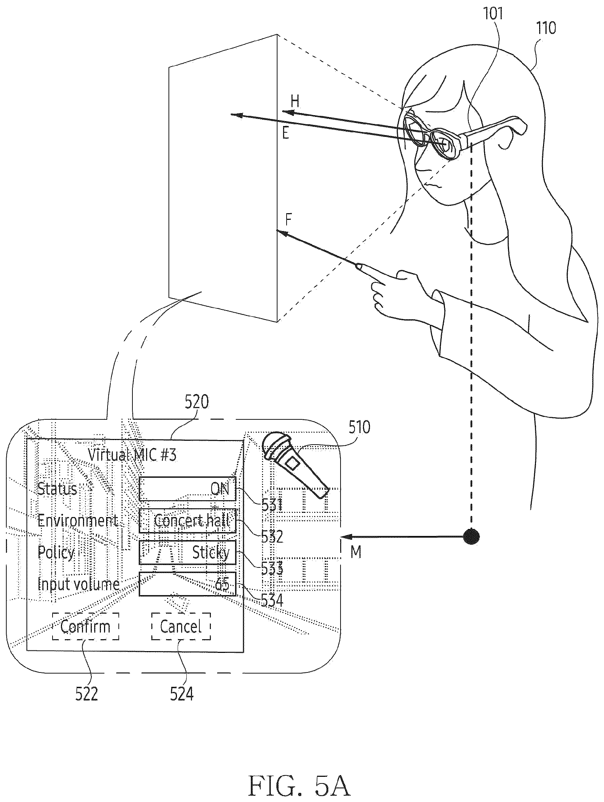

According to an embodiment, the wearable device 101 may visualize a virtual microphone as an example of a virtual object. The virtual microphone may be a virtual object for controlling recording based on a plurality of microphones included in the wearable device 101. The wearable device 101 may receive an input indicating to add a virtual microphone having a position independent of a microphone in the wearable device 101. An example of an operation in which the wearable device 101 receives the input according to an embodiment will be described with reference to FIGS. 5A to 5B. For example, the wearable device 101 may receive an input for adding a virtual microphone into an external space including the wearable device 101.

In an embodiment, the wearable device 101 may change, render, and/or synthesize an audio signal inputted through an actual microphone of the wearable device 101 by using a virtual microphone. The wearable device 101 may obtain, based on a virtual microphone added to a specific position of an external space, an audio signal indicating a vibration of the atmosphere in the specific position, by changing an audio signal inputted through a microphone in the wearable device 101. For example, at least one attribute assigned to a virtual microphone may include information about the specific position. The information may include spatial coordinates for the specific position within a spatial coordinate system related to an external space recognized by the wearable device 101. In order to estimate the audio signal of the specific position spaced apart from the microphone of the wearable device 101, the wearable device 101 may request an audio signal of the specific position to an external electronic device. When the external electronic device is disposed closer to the specific position than the wearable device 101, the wearable device 101 may more accurately estimate the vibration of the atmosphere at the specific position using the external electronic device.

Referring to FIG. 1, an exemplary case in which wearable devices 101-1 and 101-2 disposed in each of different positions P1 and P2 obtain an audio signal based on a virtual microphone disposed in a specific position V is illustrated. In an exemplary case in which a first user 110-1 wears a first wearable device 101-1 and a second user 110-2 wears a second wearable device 101-2, the first wearable device 101-1 may receive, from the first user 110-1, an input indicating to arrange a virtual microphone in the position V. For example, the first wearable device 101-1 may identify an input indicating to attach a virtual microphone to a third user 110-3. According to an embodiment, the wearable device 101 may display a virtual microphone disposed in the external space to the user 110 based on AR and/or VST. Based on the input, the first wearable device 101-1 may display a visual object 120 representing a virtual microphone attached to the third user 110-3 in a display area. At least one attribute assigned to the virtual microphone may include information for visualizing the virtual microphone in a display area formed by the display of the wearable device 101, such as the visual object 120 in a pin microphone shape. A shape of the visual object 120 representing the virtual microphone is not limited to an embodiment of FIG. 1.

In an embodiment, the first wearable device 101-1 may manage a virtual microphone based on at least one attribute. Hereinafter, the at least one attribute may include information and/or parameter related to the virtual microphone. The at least one attribute may include information (e.g., an icon and/or an image) for the first wearable device 101-1 to visualize the virtual microphone in the display area. The at least one attribute may include information used to track a position of the virtual microphone in the external space. For example, the at least one attribute may include information about an external object to which a virtual microphone is combined and/or attached. The at least one attribute may include information on a positional relationship between the external object and the virtual microphone (e.g., a behavior pattern to be described later with reference to FIGS. 2A and 2B). The at least one attribute may include a sound effect to be applied to an audio signal for a virtual microphone.

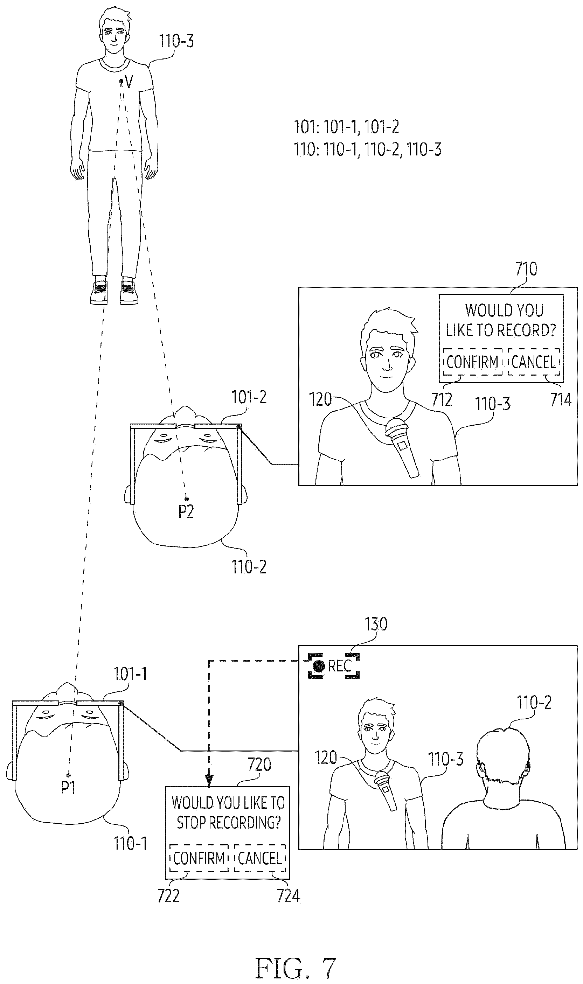

In an embodiment of FIG. 1, the first wearable device 101-1 may transmit, to an external electronic device, at least one attribute assigned to a virtual microphone by an input received from the first user 110-1. The first wearable device 101-1 may broadcast a first signal 141 including the at least one attribute. Using the first signal 141, the wearable device 101 may control recording of an external electronic device. In an embodiment, the first wearable device 101-1 may repeatedly transmit the first signal 141. For example, the first wearable device 101-1 may repeatedly transmit the first signal 141 based on a preset period. In an exemplary case of FIG. 1, the second wearable device 101-2 receiving the first signal 141 broadcasted by the first wearable device 101-1 may change a state of a microphone of the second wearable device 101-2 to a preset state for recording an audio signal. The second wearable device 101-2 may display, to the second user 110-2, a UI for changing the state of the microphone of the second wearable device 101-2 to the preset state. An example of the UI is described with reference to FIG. 7. According to an embodiment, the second wearable device 101-2 may obtain, based on an input related to the UI, an audio signal for the position V using a microphone in the second wearable device 101-2.

Referring to FIG. 1, in a state of obtaining the audio signal, the second wearable device 101-2 may display, in the display area, a visual object 120 representing a virtual microphone. In the state, the second wearable device 101-2 may display a visual object 130 indicating recording of an audio signal (e.g., a visual object including a preset text indicating recording, such as "REC"). In a state of obtaining an audio signal for the position V, the first wearable device 101-1 may also display, in the display area, the visual object 130 indicating recording of the audio signal.

In an embodiment of FIG. 1, the first wearable device 101-1 may change a first audio signal inputted through a microphone of the first wearable device 101-1, based on a position P1 of the first wearable device 101-1 and the position V of the virtual microphone. The second wearable device 101-2 may change a second audio signal inputted through a microphone of the second wearable device 101-2, based on a position P2 of the second wearable device 101-2 and the position V of the virtual microphone. The second wearable device 101-2 may transmit the changed second audio signal to the first wearable device 101-1. For example, the second wearable device 101-2 may transmit a second signal 142 to the first wearable device 101-1, as a response to the first signal 141. In an embodiment, the second signal 142 may include a bitstream (or audio stream) for the changed second audio signal.

In an embodiment of FIG. 1, the second wearable device 101-2 may transmit, to the first wearable device 101-1, the second signal 142 based on the second audio signal obtained using the microphone of the second wearable device 101-2. For example, the second wearable device 101-2 may transmit, to the first wearable device 101-1, the position (V) of the virtual microphone identified by the second wearable device 101-2 and the second audio signal obtained using the microphone of the second wearable device 101-2. For another example, the second wearable device 101-2 may change the second audio signal based on the position V of the virtual microphone identified by the second wearable device 101-2, and transmit the changed second audio signal to the first wearable device 101-1.

According to an embodiment, the first wearable device 101-1 may obtain, from the second signal 142, the second audio signal recorded by the second wearable device 101-2 based on the position V of the virtual microphone. For example, the first wearable device 101-1 may obtain, from the second signal 142, the second audio signal obtained using the microphone of the second wearable device 101-2 and the position V of the virtual microphone tracked by the second wearable device 101-2. For example, the first wearable device 101-1 may identify the changed second audio signal from the second signal 142. The first wearable device 101-1 may obtain a third audio signal for the virtual microphone by synthesizing (or rendering) the changed first audio signal and the changed second audio signal, which is transmitted from the second wearable device 101-2. The third audio signal synthesized from the changed first audio signal and the changed second audio signal may include a result of estimating a vibration of the atmosphere in the position P.

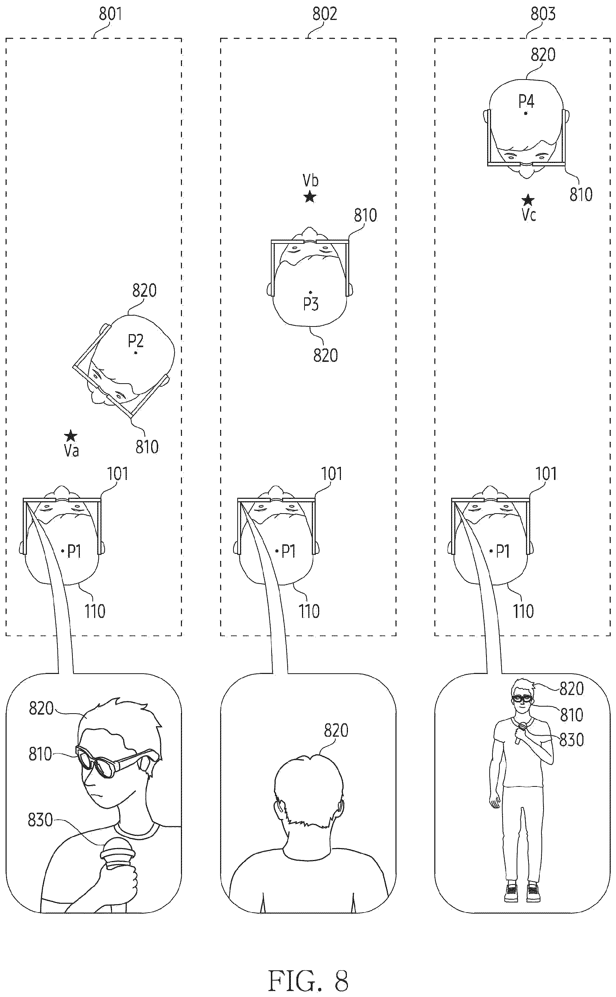

Referring to FIG. 1, the virtual microphone may be matched with a movable object like the third user 110-3. When the virtual microphone is matched with the movable object, the wearable device 101 may adjust a position of the virtual microphone, based on a position of the movable object. The embodiment is not limited thereto, and the virtual microphone may be moved by a gesture for moving the virtual microphone between users. Based on the adjusted position V of the virtual microphone, the wearable device 101 may synthesize an audio signal. In an exemplary case of FIG. 1, based on movement of the third user 110-3, an operation in which the first wearable device 101-1 and the second wearable device 101-2 synthesize or record an audio signal may be performed differently. An example of an operation in which the wearable device 101 synthesizes or renders an audio signal based on the movement of the virtual microphone according to an embodiment will be described with reference to FIG. 8.

As described above, according to an embodiment, the first wearable device 101-1 may identify an input indicating to add a virtual microphone to the position V in the external space. Based on the input, the first wearable device 101-1 may change the first audio signal inputted through a microphone. The first wearable device 101-1 may change the first audio signal, based on a positional relationship (e.g., an azimuth angle of the position V with respect to the first wearable device 101-1) between the position P1 of the first wearable device 101-1 and the position V of the virtual microphone. The first wearable device 101-1 may broadcast a first signal 141 indicating the position V of the virtual microphone to an external electronic device different from the first wearable device 101-1. The second wearable device 101-2 may identify a virtual microphone disposed in the position V, based on the first signal 141. The second wearable device 101-2 may change the second audio signal, based on a positional relationship (e.g., an azimuth angle of the position V with respect to the position V of the second wearable device 101-2) between the position P2 of the second wearable device 101-2 and the position V of the virtual microphone. The second wearable device 101-2 may transmit the second signal 142 including the changed second audio signal to the first wearable device 101-1. The first wearable device 101-1 may synthesize (or render) a third audio signal inferring the vibration of the atmosphere of the position V, by synthesizing the audio signal received from electronic devices including the first wearable device 101-1. Based on the synthesis of the third audio signal, the first wearable device 101-1 may provide a user experience similar to placing an actual microphone at the position V.

Hereinafter, hardware included in the wearable device 101 according to an embodiment and one or more programs executed by the wearable device 101 will be described with reference to FIGS. 2A and 2B.

FIGS. 2A and 2B illustrate exemplary block diagrams of a wearable device 101 according to an embodiment. The wearable device 101 of FIGS. 2A and 2B may include the wearable device 101 (e.g., the first wearable device 101-1 and/or the second wearable device 101-2) of FIG. 1.

The wearable device 101 according to an embodiment may include at least one of a processor 210, memory 220, a display 230, a camera 240, communication circuitry 250, or a microphone 260. The processor 210, the memory 220, the display 230, the camera 240, the communication circuitry 250, and the microphone 260 may be electronically and/or operably coupled with each other by an electronical component such as a communication bus 205. Hereinafter, the hardware being operably coupled may mean that a direct connection or indirect connection between the hardware is established by wire or wirelessly so that a second hardware is controlled by a first hardware among the hardware. Although illustrated based on different blocks, embodiments are not limited thereto, and some of the hardware of FIGS. 2A to 2B (e.g., at least a portion of the processor 210, the memory 220, and the communication circuitry 250) may be included in a single integrated circuit like a system on a chip (SoC). The type and/or number of hardware included in the wearable device 101 is not limited as illustrated in FIGS. 2A to 2B. For example, the wearable device 101 may include only some of the hardware components illustrated in FIG. 2A.

In an embodiment, the processor 210 of the wearable device 101 may include hardware for processing data based on one or more instructions. For example, the hardware for processing data may include an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multi-core processor such as a dual core, a quad core, or a hexa core.

In an embodiment, the memory 220 of the wearable device 101 may include hardware components for storing data and/or instructions inputted and/or outputted to the processor 210 of the wearable device 101. For example, the memory 220 may include volatile memory, such as random-access memory (RAM), and/or non-volatile memory, such as read-only memory (ROM). For example, the volatile memory may include at least one of a dynamic RAM (DRAM), a static RAM (SRAM), a Cache RAM, and a pseudo SRAM (PSRAM). For example, the nonvolatile memory may include at least one of a programmable ROM (PROM), an erasable PROM (EPROM), an electrically erasable PROM (EEPROM), a flash memory, a hard disk, a compact disc, a solid state drive (SSD), and an embedded multi media card (eMMC).

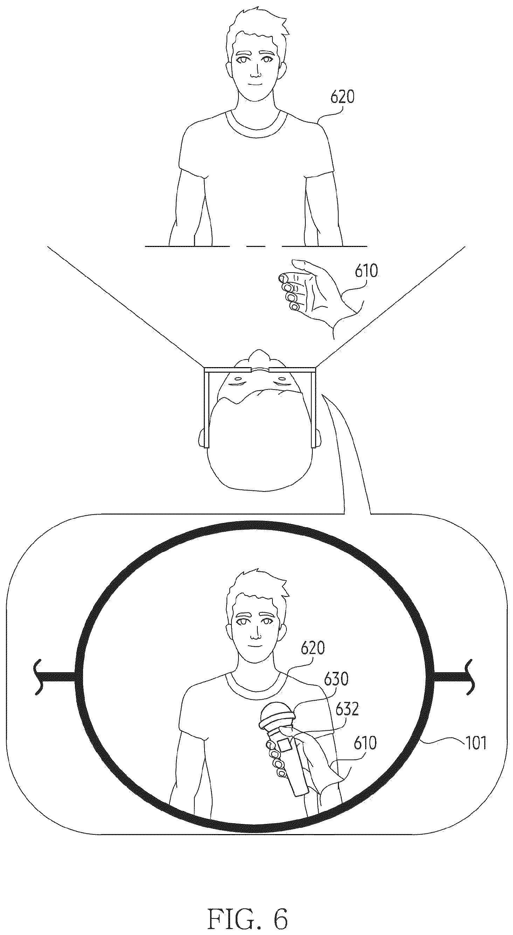

In an embodiment, the display 230 of the wearable device 101 may output visualized information (e.g., visual objects and/or screens illustrated in FIGS. 1, 5A to 5B, and 6 to 8) to a user (e.g., the user 110 of FIG. 1). For example, the display 230 may be controlled by the processor 210 including a circuit such as a graphic processing unit (GPU) to output visualized information to the user. The display 230 may include a flexible display, a flat panel display (FPD), and/or electronic paper. The display 230 may include a liquid crystal display (LCD), a plasma display panel (PDP), and/or one or more light emitting diodes (LEDs). The LED may include organic LED (OLED). The display 230 of FIG. 6 may include at least one display 350, which will be described later with reference to FIGS. 3A to 3B and/or FIGS. 4A to 4B.

In an embodiment, the camera 240 of the wearable device 101 may include one or more optical sensors (e.g., a charged coupled device (CCD) sensor, a complementary metal oxide semiconductor (CMOS) sensor) that generate an electrical signal representing the color and/or brightness of light. A plurality of optical sensors included in the camera 240 may be arranged in the form of a 2-dimensional array. The camera 240 may substantially simultaneously obtain the electrical signals of each of the plurality of optical sensors and generate 2-dimensional frame data corresponding to the light reaching the optical sensors of the 2-dimensional array. For example, photograph data captured using the camera 240 may mean one 2-dimensional frame data obtained from the camera 240. For example, video data captured using the camera 240 may mean a sequence of a plurality of 2-dimensional frame data obtained from the camera 240 according to a frame rate. The camera 240 may further include a flash light, positioned toward a direction in which the camera 240 receives light, for outputting light toward the direction. Although the camera 240 is illustrated based on a single block, the number of cameras 240 included in the wearable device 101 is not limited to the embodiment. The wearable device 101 may include one or more cameras, such as one or more cameras 340 described below with reference to FIGS. 3A to 3B and/or FIGS. 4A to 4B.

In an embodiment, the communication circuitry 250 of the wearable device 101 may include a hardware component for supporting transmission and/or reception of an electrical signal between the wearable device 101 and an external electronic device (e.g., in terms of the first wearable device 101-1 of FIG. 1, the second wearable device 101-2). For example, the communication circuitry 250 may include at least one of a modem, an antenna, and an optic/electronic (O/E) converter. The communication circuitry 250 may support transmission and/or reception of an electrical signal, based on various types of protocols, such as Ethernet, a local area network (LAN), a wide area network (WAN), wireless fidelity (WiFi), Bluetooth, Bluetooth low energy (BLE), ZigBee, long term evolution (LTE), and 5G new radio (NR).

In an embodiment, the microphone 260 of the wearable device 101 may output an electrical signal indicating a vibration of the atmosphere. For example, the wearable device 101 may obtain an audio signal including a user's speech using the microphone 260. The wearable device 101 may include a plurality of microphones. The plurality of microphones included in the wearable device 101 may be positioned at different portions of a housing of the wearable device 101. The wearable device 101 may identify, by using a plurality of microphones spaced apart from each other, a source (e.g., sound source) of a vibration of the atmosphere detected by the plurality of microphones. For example, the wearable device 101 may identify a direction of arrival (DoA) for the sound source. The wearable device 101 may identify the direction of arrival by using a phase difference of audio signals inputted through the plurality of microphones.

The electronic device 101 according to an embodiment may include an output means for outputting information in a form other than a visualized form. For example, the electronic device 101 may include a speaker for outputting an acoustic signal. The number of speakers included in the electronic device 101 may be one or more. Although not illustrated, the electronic device 101 may include another output means for outputting information in a form other than a visual form or an auditory form. For example, the electronic device 101 may include a motor for providing haptic feedback based on vibration.

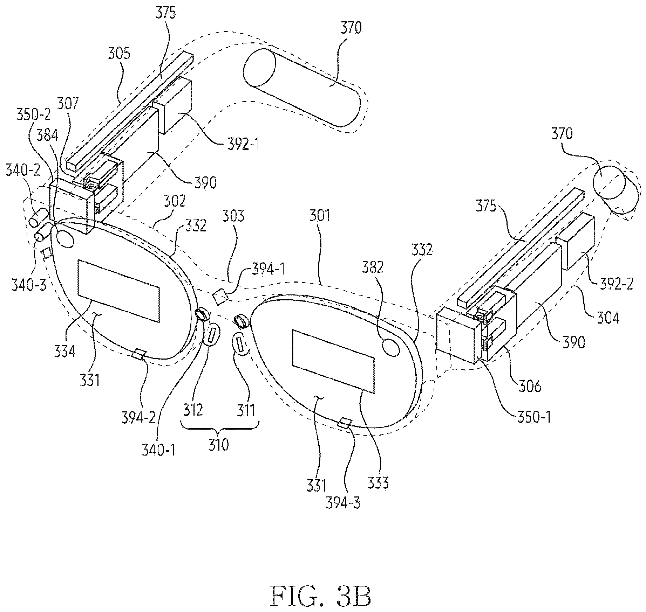

Although not illustrated, according to an embodiment, the wearable device 101 may include an output means for outputting information in a form other than a visualized form. For example, the wearable device 101 may include a speaker (e.g., speakers 392-1 and 392-2) described below with reference to FIGS. 3A and 3B) for outputting an acoustic signal. For example, the wearable device 101 may include a motor for providing haptic feedback based on vibration. According to an embodiment, the wearable device 101 may further include a sensor for generating electrical information capable of being processed by the processor 210 and/or the memory 220 of the wearable device 101 from non-electronic information related to the wearable device 101. The sensor may include a global positioning system (GPS) sensor for detecting a geographic location of the wearable device 101, an image sensor, an illuminance sensor, and/or a time-of-flight (ToF) sensor, and an inertial measurement unit (IMU) for detecting a physical motion of the wearable device 101.

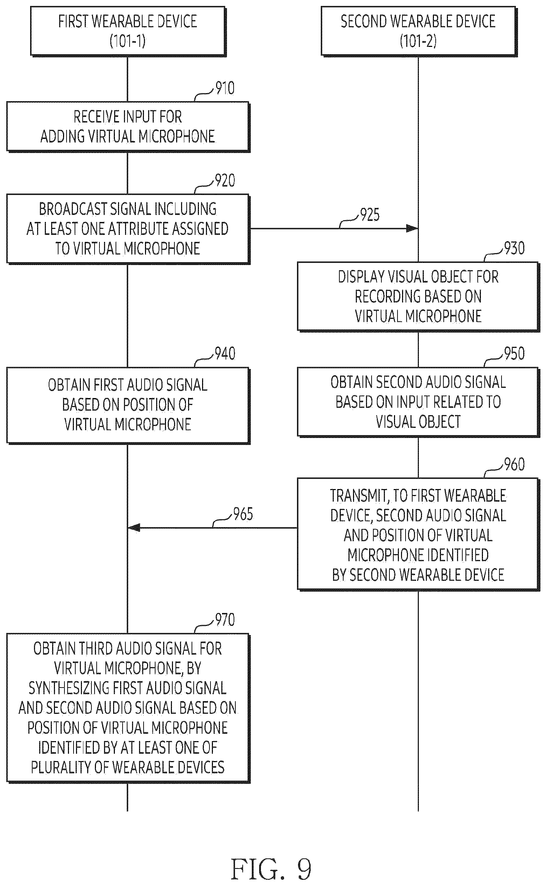

According to an embodiment, one or more instructions (or commands) indicating operations and/or actions to be performed on data by the processor 210 of the wearable device 101 may be stored in the memory 220 of the wearable device 101. A set of one or more instructions may be referred to as firmware, an operating system, a process, a routine, a sub-routine, and/or an application. Referring to FIG. 2A, the processor 210 of the wearable device 101 may perform at least one of the operations of FIGS. 9 to 11 by executing a virtual microphone application 280 and/or a system application 270. Hereinafter, an application being installed in an electronic device (e.g., the wearable device 101) may mean that one or more instructions provided in the form of an application are stored in the memory 220, and that the one or more applications are stored in an executable format (e.g., a file having a preset extension by an operating system of the wearable device 101) by the processor of the electronic device.

According to an embodiment, the processor 210 of the wearable device 101 may execute different functions related to AR and/or VST, by executing the system application 270. The processor 210 of the wearable device 101 may execute a virtual microphone application 280 to execute different functions related to the virtual microphone. For example, based on an execution of the virtual microphone application 280, the wearable device 101 may execute a function for managing at least one virtual microphone. The wearable device 101 may perform calculations related to the virtual microphone using the system application 270. The calculations related to the virtual microphone may be performed, for example, to calculate a position of the virtual microphone in an external space including the wearable device 101.

In one embodiment, the wearable device 101 may execute the system application 270 to execute functions related to AR and/or VST. The system application 270 may include an external object recognizer 271, a hand recognizer 272, a wearable device motion recognizer 273, a scene recognizer 274, and/or a physics engine 275. The external object recognizer 271, the hand recognizer 272, the wearable device motion recognizer 273, the scene recognizer 274, and the physics engine 275 may be executed by the wearable device 101 in a form of a background process. The wearable device 101 may execute at least one of the external object recognizer 271, the hand recognizer 272, the wearable device motion recognizer 273, the scene recognizer 274, or the physics engine 275, in response to a call of a preset application programming interface (API). One or more programs (e.g., the external object recognizer 271, the hand recognizer 272, the wearable device motion recognizer 273, the scene recognizer 274, and/or the physics engine 275) included in the system application 270 may share information about a spatial coordinate system representing an external space including the wearable device 101.

According to an embodiment, the wearable device 101 may recognize and/or track an external object based on an execution of the external object recognizer 271. For example, in a state that the external object recognizer 271 is executed, the wearable device 101 may identify one or more external objects in an external space including the wearable device 101, based on frames outputted from the camera 240. The wearable device 101 may identify coordinates of the one or more external objects based on a spatial coordinate system for the external space. The wearable device 101 may identify a path along which the one or more external objects have moved by comparing the frames in a time domain.

According to an embodiment, the wearable device 101 may track a preset body part, such as a hand, based on an execution of the hand recognizer 272. In a state that the hand recognizer 272 is executed, the wearable device 101 may identify one or more hands in an external space including the wearable device 101, based on frames outputted from the camera 240. The wearable device 101 may identify positions and/or angles of a plurality of j oints included in the hand. The wearable device 101 may identify a posture of the hand, based on the plurality of joints.

According to an embodiment, the wearable device 101 may identify a position and/or a rotation of the wearable device 101 within the spatial coordinate system for an external space, based on an execution of the wearable device motion recognizer 273. For example, when the wearable device 101 determines the origin of the spatial coordinate system as a position of the wearable device 101, the wearable device 101 may identify a direction of the wearable device 101 positioned at the origin and/or a rotation angle (e.g., roll, pitch, and yaw) with respect to axes (e.g., x-axis, y-axis, and z-axis) extended from the origin, based on the execution of the motion recognizer 273. The wearable device 101 may identify a direction and/or a rotation angle of the wearable device 101 by using a sensor for identifying the motion of the wearable device 101, such as the IMU sensor. In terms of degree of freedom, the wearable device motion recognizer 273 may be referred to as a 6 DoF processor.

According to an embodiment, the wearable device 101 may perform three-dimensional modeling of at least one external object included in the external space including the wearable device 101, based on an execution of the scene recognizer 274. Based on the three-dimensional modeling, the wearable device 101 may obtain information indicating at least a portion occupied by the at least one external object within the spatial coordinate system for the external space. For example, at least one external object recognized by the external object recognizer 271 and/or at least one hand identified by the hand recognizer 272 may be added within the spatial coordinate system for the external space. Based on the execution of the scene recognizer 274, the wearable device 101 may perform three-dimensional modeling of the at least one external object and/or the at least one hand added within the spatial coordinate system.

According to an embodiment, the wearable device 101 may simulate a physical phenomenon in the spatial coordinate system for the external space including the wearable device 101, based on an execution of the physics engine 275. For example, based on an execution of the virtual microphone application 280, the wearable device 101 may add a virtual microphone in the spatial coordinate system. In a state that the physics engine 275 is executed, the wearable device 101 may identify an interaction between an external object included in the spatial coordinate system and the virtual microphone, based on an execution of the external object recognizer 271. When the virtual microphone is attached to the external object, the wearable device 101 may move a three-dimensional object corresponding to the external object in the spatial coordinate system, based on the motion of the external object. Based on the above-described moved three-dimensional object, the wearable device 101 may identify the motion of the virtual microphone. When an external object is attached to the hand, the wearable device 101 may move the virtual microphone, which is indicated to be attached to the hand within the spatial coordinate system, based on a posture and/or gesture of the hand identified using the hand recognizer 272.

In an embodiment, the wearable device 101 may execute a function for tracking a virtual microphone within an external space including the wearable device, by executing the virtual microphone application 280. The function may include a function for calculating a position of the virtual microphone within the external space, based on at least one attribute assigned to the virtual microphone. The at least one attribute may indicate a behavior pattern of the virtual microphone. The behavior pattern may include an external object to which the virtual microphone is attached (e.g., the third user 110-3 of FIG. 1), whether the virtual microphone is portable by a preset body part such as a hand, and/or an attachment method between the virtual microphone and the external object. Based on the behavior pattern indicated by at least one attribute, the wearable device 101 may select one or more parameters necessary to track a position of the virtual microphone. For example, when the virtual microphone is attached to an external object, the wearable device 101 may select, based on at least one attribute, a position of the external object and a position to which the virtual microphone is attached within the external object, as the one or more parameters. Based on the selected one or more parameters, the wearable device 101 may identify a position of the virtual microphone, by executing the system application 270.

Referring to FIG. 2B, different functions supported by the virtual microphone application 280 and the system application 270 may be illustrated by being separated by different blocks. Instructions included in the virtual microphone application 280 may be divided into a virtual microphone manager 281 executed for creating, removing, and managing a virtual microphone, a virtual microphone position identifier 282 for identifying a position of a virtual microphone based on an external space (or an object within the external space) recognized based on the camera 240, an audio signal synthesizer 283 for synthesizing at least one audio signal obtained from at least one electronic device including the wearable device 101, and a communication controller 284 for communicating with an external electronic device distinct from the wearable device 101 using the communication circuitry 250.

Referring to FIG. 2B, based on an execution of the virtual microphone manager 281, the wearable device 101 may add, change, and/or delete a virtual microphone. The wearable device 101 may identify, from a user (e.g., the user 110 of FIG. 1), an input indicating to add a virtual microphone. The wearable device 101 may identify at least one attribute (e.g., a position of the virtual microphone, and/or an external object related to tracking of the virtual microphone) to be assigned to a virtual microphone, based on the input. The wearable device 101 may display a UI for adding, changing, and/or deleting a virtual microphone, based on the execution of the virtual microphone manager 281. Using the UI, the wearable device 101 may receive an input for adding, changing, and/or deleting a virtual microphone. In a state that the virtual microphone manager 281 and/or the virtual microphone application 280 are executed, the wearable device 101 may identify a distance between the virtual microphone identified by the system application 270 and the wearable device 101. In the state, the wearable device 101 may remove the virtual microphone, based on the distance. For example, when the distance exceeding a preset distance is identified, the wearable device 101 may remove the virtual microphone.

Referring to FIG. 2B, based on the execution of the virtual microphone position identifier 282, the wearable device 101 may identify a position of the virtual microphone. In order to identify the position of the virtual microphone, the wearable device 101 may at least partially execute instructions included in the system application 270. For example, in a state that an object to which the virtual microphone is attached is identified, based on at least one attribute assigned to the virtual microphone (e.g., an external object to which the virtual microphone is to be combined), the wearable device 101 may recognize and/or track the object using the system application 270. Based on the execution of the virtual microphone position identifier 282, the wearable device 101 may calculate the position of the virtual microphone, by selectively executing at least one of programs (e.g., the external object recognizer 271, the hand recognizer 272, the wearable device motion recognizer 273, the scene recognizer 274, and/or the physics engine 275) included in the system application 280. For example, when the virtual microphone is attached to an external object, the wearable device 101 may identify a position of the virtual microphone based on a position of the external object. In order to identify the position of the external object, the wearable device 101 may execute the external object recognizer 271 and/or the hand recognizer 272. When the external object cannot be tracked using the system application 270 of the wearable device 101, or the external object is spaced apart from the wearable device 101 by more than a preset distance, the wearable device 101 may obtain the position of the external object by using an external electronic device different from the wearable device 101. For example, the wearable device 101 may determine the position of the virtual microphone, based on a behavior pattern distinguished along different rows of Table 1.

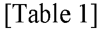

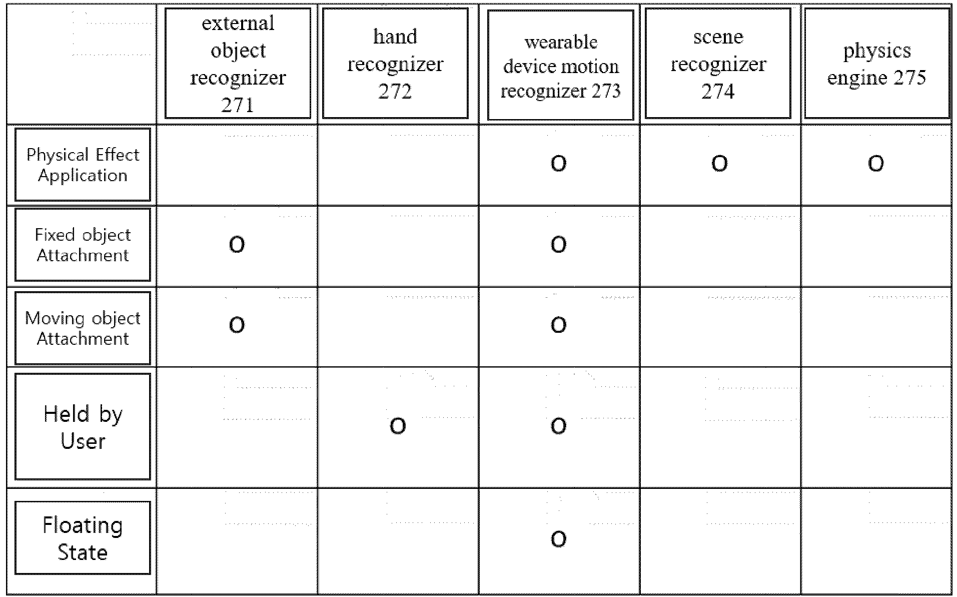

Referring to Table 1, the wearable device 101 may commonly execute the wearable device motion recognizer 273 in all behavior patterns to determine a position of the virtual microphone. Referring to Table 1, when a physical effect is applied to determine a position of the virtual microphone, the wearable device 101 may calculate the position of the virtual microphone by executing the wearable device motion recognizer 273, the scene recognizer 274, and the physics engine 275. For example, the wearable device 101 may apply a physical effect to the virtual microphone by executing the physics engine 275 based on a spatial coordinate system recognized based on the scene recognizer 274 and the wearable device motion recognizer 273. Referring to Table 1, when the virtual microphone is attached to an immovable object, the wearable device 101 may calculate the position of the virtual microphone based on the execution of the external object recognizer 271 and the wearable device motion recognizer 273. For example, the wearable device 101 may determine the position of the virtual microphone within a display area of the wearable device 101, based on a positional relationship between the immovable object tracked by the external object recognizer 271 and the wearable device 101 identified by the wearable device motion recognizer 273. Referring to Table 1, when the virtual microphone is attached to a movable object, the wearable device 101 may calculate the position of the virtual microphone based on the execution of the external object recognizer 271 and the wearable device motion recognizer 273. For example, the wearable device 101 may determine the position of the virtual microphone within the display area of the wearable device 101, based on a positional relationship between the movable object tracked by the external object recognizer 271 and the wearable device 101 identified by the wearable device motion recognizer 273. Referring to Table 1, when the virtual microphone is carried by a specific user, the wearable device 101 may track a position and/or a posture of a hand of the specific user identified by the hand recognizer 272. Based on the tracked position and/or posture of the hand, the wearable device 101 may identify the virtual microphone being moved by the hand. Referring to Table 1, when the virtual microphone is floating at a specific point (e.g., midair) in an external space, the wearable device 101 may determine the position of the virtual microphone within the display area of the wearable device 101, based on a positional relationship between the wearable device 101 identified by the wearable device motion recognizer 273 and the specific point.

Referring to FIG. 2B, based on an execution of the audio signal synthesizer 283, the wearable device 101 may synthesize one or more audio signals. The wearable device 101 may synthesize the one or more audio signals based on a position of the virtual microphone identified by the virtual microphone position identifier 282. The wearable device 101 may synthesize audio signals inputted through microphones (e.g., the microphone 260 of FIG. 2A) included in the wearable device 101, based on the position of the virtual microphone. For example, the wearable device 101 may synthesize another audio signal representing a vibration of the atmosphere of the position of the virtual microphone from the audio signals. The audio signal synthesized by the audio signal synthesizer 283 may be an audio signal representing the vibration of the atmosphere identified within the position of the virtual microphone.

According to an embodiment, an audio signal used by the wearable device 101 to execute the audio signal synthesizer 283 is not limited to an audio signal inputted through a microphone in the wearable device 101. The wearable device 101 may execute the communication controller 284 to obtain an audio signal from an external electronic device different from the wearable device 101. In a state that the communication controller 284 is executed, the wearable device 101 may request an external electronic device different from the wearable device 101 to record an audio signal based on the virtual microphone, by controlling the communication circuitry 250. For example, the wearable device 101 may broadcast a first signal including at least one attribute (e.g., an external object to which the virtual microphone is combined) assigned to the virtual microphone. The first signal broadcasted by the wearable device 101 may be transmitted to one or more external electronic devices spaced apart from the virtual microphone by less than a preset distance. Similarly, the wearable device 101 may identify the virtual microphone from a signal broadcasted from an external electronic device by using the communication controller 284.

According to an embodiment, in a state that the communication controller 284 is executed, the wearable device 101 may establish a communication link with an external electronic device, or receive an audio signal through the established communication link. For example, the wearable device 101 may receive, from the external electronic device, a second signal including an audio signal recorded by the external electronic device as a response to the first signal. The wearable device 101 receiving the second signal may synthesize the audio signal included in the second signal and the audio signal inputted through the microphone of the wearable device 101, by executing the audio signal synthesizer 283. Based on the synthesis, the wearable device 101 may obtain an audio signal corresponding to the virtual microphone. In a state that the audio signal synthesizer 283 is executed, the wearable device 101 according to an embodiment may receive audio signals from a plurality of electronic devices including the wearable device 101. The wearable device 101 may obtain an audio signal corresponding to the virtual microphone from at least one audio signal selected based on distances between the virtual microphone and each of the plurality of electronic devices among the received audio signals.

As described above, according to an embodiment, the wearable device 101 may synthesize audio signals obtained by the plurality of electronic devices including the wearable device 101, based on an execution of the virtual microphone application 280 and/or the system application 270. In order to synthesize the audio signals, the wearable device 101 may determine a position of the virtual microphone within an external space including the wearable device 101. The wearable device 101 may determine the position of the virtual microphone, based on at least one attribute assigned to the virtual microphone. The at least one attribute may indicate a movable external object (e.g., a hand) to which the virtual microphone is attached. The wearable device 101 may determine the position of the virtual microphone, based on the position of the external object. The wearable device 101 may obtain an audio signal from the microphone 260 within the wearable device 101 and/or an external electronic device included within the external space, based on the determined position. A distance between the external electronic device and the position of the virtual microphone may be smaller than a distance between the wearable device 101 and the position of the virtual microphone. The wearable device 101 may obtain an audio signal for the virtual microphone, by synthesizing an audio signal obtained from the microphone 260 and an audio signal obtained from the external electronic device. In a state of obtaining an audio signal for a virtual microphone spaced apart from the wearable device 101, the wearable device 101 may use an external electronic device positioned closer to the position of the virtual microphone than the wearable device 101. The wearable device 101 may obtain, by using the external electronic device, an audio signal having improved quality than an audio signal obtained from the microphone 260 of the wearable device 101 as an audio signal for the virtual microphone.

Hereinafter, an example of a form factor of the wearable device 101 according to an embodiment will be described using FIGS. 3A to 3B and/or 4A to 4B.

FIG. 3A illustrates an example of a perspective view of a wearable device according to an embodiment. FIG. 3B illustrates an example of one or more hardware disposed in the wearable device 300 according to an embodiment. The wearable device 300 of FIGS. 3A to 3B may include the wearable device 101 of FIGS. 1, 2A to 2B. As shown in FIG. 3A, according to an embodiment, the wearable device 300 may include at least one display 350 and a frame supporting the at least one display 350.

According to an embodiment, the wearable device 300 may be wearable on a portion of the user's body. The wearable device 300 may provide augmented reality (AR), virtual reality (VR), or mixed reality (MR) combining the augmented reality and the virtual reality to a user wearing the wearable device 300. For example, the wearable device 300 may output a virtual reality image through at least one display 350, in response to a user's preset gesture obtained through a motion recognition camera 340-2 of FIG. 3B.

According to an embodiment, the at least one display 350 in the wearable device 300 may provide visual information to a user. The at least one display 350 may include the display 230 of FIG. 2. For example, the at least one display 350 may include a transparent or translucent lens. The at least one display 350 may include a first display 350-1 and/or a second display 350-2 spaced apart from the first display 350-1. For example, the first display 350-1 and the second display 350-2 may be disposed at positions corresponding to the user's left and right eyes, respectively.

Referring to FIG. 3B, the at least one display 350 may form a display area on the lens to provide a user wearing the wearable device 300 with visual information included in ambient light passing through the lens and other visual information distinct from the visual information. The lens may be formed based on at least one of a fresnel lens, a pancake lens, or a multi-channel lens. The display area formed by the at least one display 350 may be formed on the second surface 332 of the first surface 331 and the second surface 332 of the lens. When the user wears the wearable device 300, ambient light may be transmitted to the user by being incident on the first surface 331 and being penetrated through the second surface 332. For another example, the at least one display 350 may display a virtual reality image to be combined with a reality screen transmitted through ambient light. The virtual reality image outputted from the at least one display 350 may be transmitted to eyes of the user, through one or more hardware (e.g., optical devices 382 and 384, and/or at least one waveguides 333 and 334) included in the wearable device 300.

According to an embodiment, the wearable device 300 may include waveguides 333 and 334 that transmit light transmitted from the at least one display 350 and relayed by the at least one optical device 382 and 384 by diffracting to the user. The waveguides 333 and 334 may be formed based on at least one of glass, plastic, or polymer. A nano pattern may be formed on at least a portion of the outside or inside of the waveguides 333 and 334. The nano pattern may be formed based on a grating structure having a polygonal or curved shape. Light incident to an end of the waveguides 333 and 334 may be propagated to another end of the waveguides 333 and 334 by the nano pattern. The waveguides 333 and 334 may include at least one of at least one diffraction element (e.g., a diffractive optical element (DOE), a holographic optical element (HOE)), and a reflection element (e.g., a reflection mirror). For example, the waveguides 333 and 334 may be disposed in the wearable device 300 to guide a screen displayed by the at least one display 350 to the user's eyes. For example, the screen may be transmitted to the user's eyes through total internal reflection (TIR) generated in the waveguides 333 and 334.

According to an embodiment, the wearable device 300 may analyze an object included in a real image collected through a photographing camera 340-1, combine with a virtual object corresponding to an object that become a subject of augmented reality provision among the analyzed object, and display on the at least one display 350. The virtual object may include at least one of text and images for various information associated with the object included in the real image. The wearable device 300 may analyze the object based on a multi-camera such as a stereo camera. For the object analysis, the wearable device 300 may execute time-of-flight (ToF) and/or simultaneous localization and mapping (SLAM) supported by the multi-camera. The user wearing the wearable device 300 may watch an image displayed on the at least one display 350.

According to an embodiment, a frame may be configured with a physical structure in which the wearable device 300 may be worn on the user's body. According to an embodiment, the frame may be configured so that when the user wears the wearable device 300, the first display 350-1 and the second display 350-2 may be positioned corresponding to the user's left and right eyes. The frame may support the at least one display 350. For example, the frame may support the first display 350-1 and the second display 350-2 to be positioned at positions corresponding to the user's left and right eyes.

According to an embodiment, referring to FIG. 3A, according to an embodiment, the frame may include an area 320 at least partially in contact with the portion of the user's body in case that the user wears the wearable device 300. For example, the area 320 of the frame in contact with the portion of the user's body may include an area in contact with a portion of the user's nose, a portion of the user's ear, and a portion of the side of the user's face that the wearable device 300 contacts. According to an embodiment, the frame may include a nose pad 310 that is contacted on the portion of the user's body. When the wearable device 300 is worn by the user, the nose pad 310 may be contacted on the portion of the user's nose. The frame may include a first temple 304 and a second temple 305, which are contacted on another portion of the user's body that is distinct from the portion of the user's body.

According to an embodiment, the frame may include a first rim 301 surrounding at least a portion of the first display 350-1, a second rim 302 surrounding at least a portion of the second display 350-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the wearable device 300 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 300 may include hardware (e.g., hardware described above based on the block diagram of FIG. 2A to 2B) that performs various functions. For example, the hardware may include a battery module 370, an antenna module 375, optical devices 382 and 384, speakers 392-1 and 392-2, microphones 394-1, 394-2, and 394-3, a depth sensor module (not illustrated), and/or a printed circuit board 390. Various hardware may be disposed in the frame.

According to an embodiment, the microphones 394-1, 394-2, and 394-3 of the wearable device 300 may obtain a sound signal, by being disposed on at least a portion of the frame. The microphones 394-1, 394-2, and 394-3 may be an example of the microphone 260 of FIGS. 2A to 2B. The first microphone 394-1 disposed on the nose pad 310, the second microphone 394-2 disposed on the second rim 302, and the third microphone 394-3 disposed on the first rim 301 are illustrated in FIG. 3B, but the number and disposition of the microphone 394 are not limited to an embodiment of FIG. 3B. In a case that the number of the microphone 394 included in the wearable device 300 is two or more, the wearable device 300 may identify a direction of the sound signal by using a plurality of microphones disposed on different portions of the frame.

According to an embodiment, the optical devices 382 and 384 may transmit a virtual object transmitted from the at least one display 350 to the wave guides 333 and 334. For example, the optical devices 382 and 384 may be projectors. The optical devices 382 and 384 may be disposed adjacent to the at least one display 350 or may be included in the at least one display 350 as a portion of the at least one display 350. The first optical device 382 may correspond to the first display 350-1, and the second optical device 384 may correspond to the second display 350-2. The first optical device 382 may transmit light outputted from the first display 350-1 to the first waveguide 333, and the second optical device 384 may transmit light outputted from the second display 350-2 to the second waveguide 334.

In an embodiment, a camera 340 may include an eye tracking camera (ET CAM) 340-1, a motion recognition camera 340-2 and/or the photographing camera 340-3. The photographing camera 340-3, the eye tracking camera 340-1, and the motion recognition camera 340-2 may be disposed at different positions on the frame and may perform different functions. The photographing camera 340-3, the eye tracking camera 340-1, and the motion recognition camera 340-2 may be an example of the camera 240 of FIG. 2A to 2B. The eye tracking camera 340-1 may output data indicating a gaze of the user wearing the wearable device 300. For example, the wearable device 300 may detect the gaze from an image including the user's pupil, obtained through the eye tracking camera 340-1. An example in which the eye tracking camera 340-1 is disposed toward the user's right eye is illustrated in FIG. 3B, but the embodiment is not limited thereto, and the eye tracking camera 340-1 may be disposed alone toward the user's left eye or may be disposed toward two eyes.

In an embodiment, the photographing camera 340-3 may photograph a real image or background to be matched with a virtual image in order to implement the augmented reality or mixed reality content. The photographing camera may photograph an image of a specific object existing at a position viewed by the user and may provide the image to the at least one display 350. The at least one display 350 may display one image in which a virtual image provided through the optical devices 382 and 384 is overlapped with information on the real image or background including the image of the specific object obtained by using the photographing camera. In an embodiment, the photographing camera may be disposed on the bridge 303 disposed between the first rim 301 and the second rim 302.

In an embodiment, the eye tracking camera 340-1 may implement a more realistic augmented reality by matching the user's gaze with the visual information provided on the at least one display 350, by tracking the gaze of the user wearing the wearable device 300. For example, when the user looks at the front, the wearable device 300 may naturally display environment information associated with the user's front on the at least one display 350 at a position where the user is positioned. The eye tracking camera 340-1 may be configured to capture an image of the user's pupil in order to determine the user's gaze. For example, the eye tracking camera 340-1 may receive gaze detection light reflected from the user's pupil and may track the user's gaze based on the position and movement of the received gaze detection light. In an embodiment, the eye tracking camera 340-1 may be disposed at a position corresponding to the user's left and right eyes. For example, the eye tracking camera 340-1 may be disposed in the first rim 301 and/or the second rim 302 to face the direction in which the user wearing the wearable device 300 is positioned.

The motion recognition camera 340-2 may provide a specific event to the screen provided on the at least one display 350 by recognizing the movement of the whole or portion of the user's body, such as the user's torso, hand, or face. The motion recognition camera 340-2 may obtain a signal corresponding to motion by recognizing the user's gesture, and may provide a display corresponding to the signal to the at least one display 350. A processor may identify a signal corresponding to the operation and may perform a preset function based on the identification. In an embodiment, the motion recognition camera 340-2 may be disposed on the first rim 301 and/or the second rim 302.

According to an embodiment, the camera 340 included in the wearable device 300 is not limited to the above-described eye tracking camera 340-1 and the motion recognition camera 340-2. For example, the wearable device 300 may identify an external object included in the FoV by using a photographing camera 340-3 disposed toward the user's FoV. The wearable device 300 identifying the external object may be performed based on a sensor for identifying a distance between the wearable device 300 and the external object, such as a depth sensor and/or a time of flight (ToF) sensor. The camera 340 disposed toward the FoV may support an autofocus function and/or an optical image stabilization (OIS) function. For example, in order to obtain an image including a face of the user wearing the wearable device 300, the wearable device 300 may include the camera 340 (e.g., a face tracking (FT) camera) disposed toward the face.

Although not illustrated, the wearable device 300 according to an embodiment may further include a light source (e.g., LED) that emits light toward a subject (e.g., user's eyes, face, and/or an external object in the FoV) photographed by using the camera 340. The light source may include an LED having an infrared wavelength. The light source may be disposed on at least one of the frame, and the hinge units 306 and 307.

According to an embodiment, the battery module 370 may supply power to electronic components of the wearable device 300. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

In an embodiment, the antenna module 375 may transmit the signal or power to the outside of the wearable device 300 or may receive the signal or power from the outside. The antenna module 375 may be electrically and/or operably connected to communication circuitry (e.g., the communication circuitry 250 of FIG. 2A to 2B) in the wearable device 300. In an embodiment, the antenna module 375 may be disposed in the first temple 304 and/or the second temple 305. For example, the antenna module 375 may be disposed close to one surface of the first temple 304 and/or the second temple 305.

The speakers 392-1 and 392-2 may output a sound signal to the outside of the wearable device 300. A sound output module may be referred to as a speaker. In an embodiment, the speakers 392-1 and 392-2 may be disposed in the first temple 304 and/or the second temple 305 in order to be disposed adjacent to the ear of the user wearing the wearable device 300. For example, the wearable device 300 may include a second speaker 392-2 disposed adjacent to the user's left ear by being disposed in the first temple 304, and a first speaker 392-1 disposed adjacent to the user's right ear by being disposed in the second temple 305.

The light emitting module (not illustrated) may include at least one light emitting element. The light emitting module may emit light of a color corresponding to a specific state or may emit light through an operation corresponding to the specific state in order to visually provide information on a specific state of the wearable device 300 to the user. For example, when the wearable device 300 requires charging, it may emit repeatedly red light at a designated time. In an embodiment, the light emitting module may be disposed on the first rim 301 and/or the second rim 302.

Referring to FIG. 3B, according to an embodiment, the wearable device 300 may include the printed circuit board (PCB) 390. The PCB 390 may be included in at least one of the first temple 304 or the second temple 305. The PCB 390 may include an interposer disposed between at least two sub PCBs. On the PCB 390, one or more hardware (e.g., hardware illustrated by blocks described above with reference to FIG. 2A to 2B) included in the wearable device 300 may be disposed. The wearable device 300 may include a flexible PCB (FPCB) for interconnecting the hardware.

According to an embodiment, the wearable device 300 may include at least one of a gyro sensor, a gravity sensor, and/or an acceleration sensor for detecting the posture of the wearable device 300 and/or the posture of a body part (e.g., a head) of the user wearing the wearable device 300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 300 may identify the user's motion and/or gesture performed to execute or stop a specific function of the wearable device 300 based on the IMU.

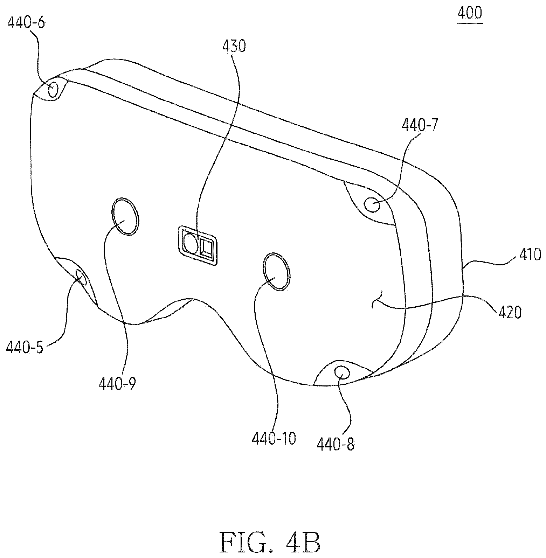

FIGS. 4A to 4B illustrate an example of an exterior of a wearable device 400 according to an embodiment. The wearable device 400 of FIGS. 4A to 4B may include the wearable device 101 of FIGS. 1 and 2A to 2B. According to an embodiment, an example of an exterior of a first surface 410 of a housing of the wearable device 400 is shown in FIG. 4A, and an example of an exterior of a second surface 420 opposite to the first surface 410 may be shown in FIG. 4B.

Referring to FIG. 4A, according to an embodiment, the first surface 410 of the wearable device 400 may have an attachable shape on the user's body part (e.g., the user's face). Although not illustrated, the wearable device 400 may further include a strap for being fixed on the user's body part, and/or one or more temples (e.g., the first temple 304 and/or the second temple 305 of FIGS. 3A to 3B). A first display 350-1 for outputting an image to the left eye among the user's two eyes and a second display 350-2 for outputting an image to the right eye among the user's two eyes may be disposed on the first surface 410. The wearable device 400 may further include rubber or silicon packing, which are formed on the first surface 410, for preventing interference by light (e.g., ambient light) different from the light emitted from the first display 350-1 and the second display 350-2.

According to an embodiment, the wearable device 400 may include cameras 440-1 and 440-2 for photographing and/or tracking two eyes of the user adjacent to each of the first display 350-1 and the second display 350-2. The cameras 440-1 and 440-2 may be referred to as the ET camera. According to an embodiment, the wearable device 400 may include cameras 440-3 and 440-4 for photographing and/or recognizing the user's face. The cameras 440-3 and 440-4 may be referred to as a FT camera.

Referring to FIG. 4B, a camera (e.g., cameras 440-5, 440-6, 440-8, 440-8, 440-9, and 440-10), and/or a sensor (e.g., the depth sensor 430) for obtaining information associated with the external environment of the wearable device 400 may be disposed on the second surface 420 opposite to the first surface 410 of FIG. 4A. For example, the cameras 440-5, 440-6, 440-7, 440-8, 440-9, and 440-10 may be disposed on the second surface 420 in order to recognize an external object distinct from the wearable device 400. For example, by using cameras 440-9 and 440-10, the wearable device 400 may obtain an image and/or video to be transmitted to each of the user's two eyes. The camera 440-9 may be disposed on the second surface 420 of the wearable device 400 to obtain an image to be displayed through the second display 350-2 corresponding to the right eye among the two eyes. The camera 440-10 may be disposed on the second surface 420 of the wearable device 400 to obtain an image to be displayed through the first display 350-1 corresponding to the left eye among the two eyes.

According to an embodiment, the wearable device 400 may include the depth sensor 430 disposed on the second surface 420 in order to identify a distance between the wearable device 400 and the external object. By using the depth sensor 430, the wearable device 400 may obtain spatial information (e.g., a depth map) about at least a portion of the FoV of the user wearing the wearable device 400.

Although not illustrated, a microphone (e.g., the microphone 260 of FIGS. 2A to 2B)) for obtaining sound outputted from the external object may be disposed on the second surface 420 of the wearable device 400. The number of microphones may be one or more according to embodiments.

As described above, according to an embodiment, the wearable device 400 may have a form factor wearable on a user's head. The wearable device 400 may provide, in a state of being worn on the head, a user experience based on augmented reality, virtual reality, and/or mixed reality. By using the cameras 440-5, 440-6, 440-7, 440-8, 440-9, and 440-10 for tracking an external object included in the external space, the wearable device 400 may record an audio signal based on the virtual microphone.

Hereinafter, an example of an operation in which a wearable device (e.g., the wearable device 101 of FIGS. 1, 2A or 2B) including the wearable device 300 of FIGS. 3A or 3B and/or the wearable device 400 of FIGS. 4A or 4B identifies an input for adding a virtual microphone will be described with reference to FIGS. 5A to 5B.

FIGS. 5A to 5B illustrate an example of an operation in which the wearable device 101 identifies an input indicating to add a virtual microphone, according to an embodiment. The wearable device 101 of FIGS. 1, 2A, and 2B may include the wearable device 101 of FIGS. 5A to 5B.

Referring to FIG. 5A, the wearable device 101 according to an embodiment may identify a direction M in which the wearable device 101 and/or the user 110 moves, based on a geographical position of the wearable device 101 identified through a sensor. The wearable device 101 may identify, based on data of IMU, a direction H in which a head of a user 110 wearing the wearable device 101 faces. In a state of being worn by the user 110, the wearable device 101 may identify a direction E of an eye using a camera (e.g., the camera 240 of FIG. 2A, the ET camera 340-1 of FIG. 3B, and/or the cameras 440-3 and 440-4 of FIG. 4A) disposed to face the user 110's eye. The wearable device 101 may identify a hand from frames of another camera (e.g., the camera 240 of FIG. 2A, the motion recognition camera 340-2 of FIG. 3B, and/or the cameras 440-5, 440-6, 440-7, 440-8, 440-9, and 440-10 of FIG. 4B) having a direction different from that of the camera disposed toward the eye. The wearable device 101 may identify a direction F of at least one finger included in the hand based on the posture of the hand. The directions H, E, F, and M may be a direction of a body part of the user 110 using a sensor and/or a camera. For example, the wearable device 101 may obtain information indicating a direction (e.g., at least one of directions H, E, F, and M) of a body part using a sensor.

The wearable device 101 according to an embodiment may identify an input indicating to add a virtual microphone, based on a direction (e.g., at least one of directions H, E, F, and M) of the body part. Referring to FIG. 5A, an example in which the wearable device 101 displays visual objects 510 and 520 related to the virtual microphone in a display area by using a display in a state of identifying the input is illustrated. Referring to FIG. 5A, in a state that the user 110 wears the wearable device 101, the wearable device 101 may display a visual object 510 representing a virtual microphone in a portion of a display area indicated by the direction. A shape of the visual object 510 may be dependent on at least one attribute (e.g., an icon and/or an image corresponding to the virtual microphone) assigned to the virtual microphone. A position of the visual object 510 may be changed by a direction of the body part identified by the wearable device 101. For example, the wearable device 101 may identify an input indicating to move the visual object 510 based on a posture of the hand holding the visual object 510 and/or the direction F of the hand. Based on the input, the wearable device 101 may change a position of the visual object 510 in a display area. For example, the wearable device 101 may display the visual object 510 in a portion of a display area toward which the direction F of the hand faces. As the direction F of the hand is moved, the wearable device 101 may move the visual object 510 within the display area.

Referring to FIG. 5A, the wearable device 101 according to an embodiment may display a visual object 520 for changing at least one attribute (e.g., a position of the virtual microphone) assigned to the virtual microphone in the display area. The visual object 520 may be displayed based on identifying a preset gesture (e.g., a posture of the hand holding the visual object 510) related to the visual object 510 representing the microphone. The wearable device 101 may display the visual object 520 based on identifying a preset gesture (e.g., a gesture of pressing a portion) with respect to a portion (e.g., a portion where a button of the microphone is displayed) of the visual object 510. Although the visual object 520 having a form of a window exemplarily is illustrated, the embodiment is not limited thereto.

Referring to FIG. 5A, the wearable device 101 according to an embodiment may display visual objects 531, 532, 533, and 534 corresponding to attributes for a virtual microphone in the visual object 520. The wearable device may display, in the visual object 520, a name uniquely assigned to a virtual microphone corresponding to the visual objects 510 and 520. The visual object 531 may correspond to an attribute indicating whether to perform recording based on the virtual microphone, among attributes of the virtual microphone. The wearable device 101 may display a state of a virtual microphone selected from an active state or an inactive state, using the visual object 531. The active state may include a state for recording an audio signal based on the virtual microphone. The inactive state may include a state in which recording of the audio signal is ceased. The wearable device 101 may identify an input for switching a state of the virtual microphone by using the visual object 531. The visual object 531 may have a form of a drop-down box for selecting a state of the virtual microphone among the active state and the inactive state. The state of the virtual microphone, which is selectable through the visual object 531, is not limited to the active state and the inactive state. For example, the state of the virtual microphone selectable through visual object 531 may include a preset state (e.g., an automatic recording state) in which recording of an audio signal is conditionally initiated or ceased based on receiving an audio signal exceeding a preset size through the virtual microphone.

Referring to FIG. 5A, the wearable device 101 may display, in the visual object 520, a visual object 532 for selecting a sound effect to be applied to an audio signal to be obtained through the virtual microphone. The visual object 532 may have a form of a drop-down box in which different sound effects are listed. The sound effects included in the visual object 532 may include concert hall, echo, and/or voice modulation.

Referring to FIG. 5A, the wearable device 101 may display, in the visual object 520, a visual object 533 for selecting a behavior pattern of a virtual microphone. The visual object 533 may have a form of a drop-down box in which the behavior pattern to be used to calculate a position of the virtual microphone is listed. The behavior pattern of the virtual microphone selectable through the visual object 533 may include a first behavior pattern configured to be adhered to an external object different from the wearable device 101, a second behavior pattern configured to float an external space including the wearable device 101, and/or a third behavior pattern configured to interact with an external object based on a physical law. The first behavior pattern to the third behavior pattern may be displayed through the visual object 533, based on different texts. For example, a text "sticky" in the visual object 533 of FIG. 5A may indicate that the first behavior pattern has been selected. Based on the behavior pattern selected by the visual object 533, the wearable device 101 may identify an external object in the display area adjacent to the visual object 510 representing the virtual microphone. In the example in which the first behavior pattern is selected, the wearable device 101 may select the external object adjacent to the visual object 510 as an external object to which the virtual microphone is attached.

Referring to FIG. 5A, the wearable device 101 may display, in the visual object 520, a visual object 534 for selecting a reference volume of an audio signal recorded based on a virtual microphone. The visual object 534 may have a form for selecting and/or adjusting a numeric value indicating the reference volume within a preset range, such as a slider. The wearable device 101 may display, in the visual object 520, a visual object 522 for storing at least one attribute adjusted by the visual objects 531, 532, 533, and 534. In the visual object 522, the wearable device 101 may display preset text (e.g., "confirm") indicating to store the at least one attribute. The wearable device 101 may display a visual object 524 for ceasing display of the visual object 520 in the visual object 520. In the visual object 524, the wearable device 101 may display preset text (e.g., "cancel") indicating to cease display of the visual object 520.

Referring to FIG. 5A, attributes assigned to a virtual microphone based on visual objects 531, 532, 533, and 534 are illustrated, but embodiments are not limited thereto. For example, at least one of the visual objects 531, 532, 533, and 534 may be omitted. For example, in the visual object 520, the wearable device 101 may display a visual object for changing a user capable of adjusting a state of the virtual microphone, independently of the visual object 531 for switching the state. For example, the wearable device 101 may identify an input for selecting one or more users who are allowed to adjust a state of the virtual microphone based on a contact list stored in the wearable device 101. For example, the wearable device 101 may receive an input for selecting a user who is allowed to change at least one attribute assigned to a virtual micro, based on the visual object 520. In the example, the wearable device 101 may identify an input for selecting one or more users who are allowed to change the at least one attribute assigned to the virtual microphone, based on the contact list. For example, the wearable device 101 may identify an input for selecting one or more users to perform recording of an audio signal based on a virtual microphone, using the visual object 520. The wearable device 101 may identify an input for selecting whether to broadcast at least one attribute assigned to the virtual microphone using the visual object 520.

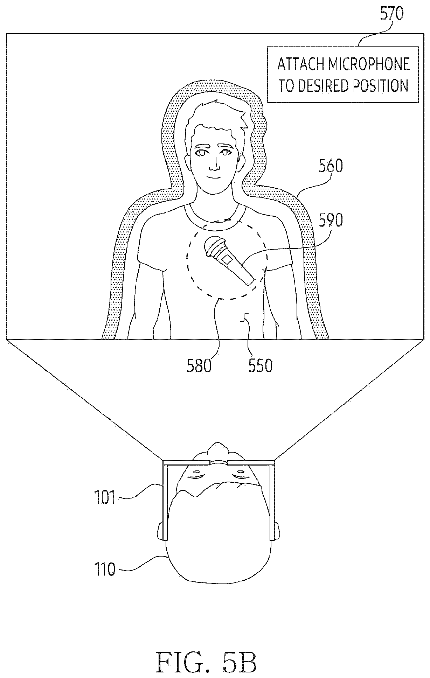

Referring to FIG. 5B, according to an embodiment, the wearable device 101 may display a screen for combining a virtual microphone to an external object 550 viewed through a display area. For example, in a state that the user 110 wears the wearable device 101, a display area of the wearable device 101 may include an image of the front of the user 110. The wearable device 101 may display a visual object 570 for guiding selection of the external object 550 to which the virtual microphone is to be combined. In the visual object 570, the wearable device 101 may display text (e.g., "attach a microphone to the desired position") for guiding selection of an external object displayed through the display area. The wearable device 101 may identify a gesture for selecting a point 580 on the external object 550 in the display area. The wearable device 101 may identify the gesture based on a direction (e.g., at least one of directions H, E, F, and M) of a body part described above with reference to FIG. 5A. Referring to FIG. 5B, the wearable device 101 may display a visual object 560 along an outline in the display area of the external object 550, based on the gesture of selecting the point 580. The visual object 560 may be displayed by the wearable device 101 to emphasize the external object 550 selected by the gesture.

In an embodiment of FIG. 5B, based on a gesture of selecting the point 580 on the external object 550, the wearable device 101 may display a visual object 590 representing a virtual microphone. The wearable device 101 may overlappingly display the visual object 590 on the point 580 selected by the gesture. In a state of FIG. 5B of selecting the external object 550 to which the virtual microphone is to be combined, the wearable device 101 may display a visual object 590 having a layout of a pin microphone. The wearable device 101 may combine the external object 550 and the virtual microphone by the gesture of selecting the point 580. The wearable device 101 may determine a position of the virtual microphone by tracking a position of the external object 550 to which the virtual microphone is combined. In an embodiment of FIG. 5B in which the virtual microphone is combined to an external object 550 which is a human, the wearable device 101 may select a position of a point (e.g., a human neck) of the external object 550 corresponding to the point 580 as a position of the virtual microphone. In order to track the external object 550, the wearable device 101 may execute the external object recognizer 271 of FIG. 2B.

As described above, the wearable device 101 according to an embodiment may add a virtual microphone at a point spaced apart from a microphone (e.g., the microphone 260 of FIG. 2A) in the wearable device 101. As in the above-described embodiment with reference to FIG. 5A, the wearable device 101 may obtain at least one attribute related to the virtual microphone from the user 110. As in the above-described embodiment with reference to FIG. 5B, the wearable device 101 may display a UI for selecting an external object 550 used to determine the position of the virtual microphone. The wearable device 101 may change an audio signal inputted through the microphone in the wearable device 101, by using the added virtual microphone. The wearable device 101 may generate another audio signal for the point to which the virtual microphone is added, by changing the audio signal.

Hereinafter, an embodiment in which the wearable device 101 according to an embodiment displays a virtual microphone in a display area will be described with reference to FIG. 6.

FIG. 6 illustrates an example of an operation of visualizing a virtual microphone by a wearable device 101 according to an embodiment. The wearable device 101 of FIGS. 1, 2A, and 2B may include the wearable device 101 of FIG. 6.

According to an embodiment, the wearable device 101 may determine a position of the virtual microphone in an external space, based on at least one attribute assigned to a virtual microphone. Referring to FIG. 6, an exemplary state in which a virtual microphone having an attribute configured to be moved by a preset body part such as a hand 610 is added is illustrated. In a state of FIG. 6, as described above with reference to Table 1, the wearable device 101 may identify a position and/or a posture of the hand 610 within a display area, by executing the hand recognizer 272 of FIG. 2B. In order to recognize the hand 610 within the display area, the wearable device 101 may recognize an external space including the hand 610 by using a camera (e.g., the camera 240 of FIG. 2A) disposed toward a preset direction. Based on at least one attribute assigned to the virtual microphone, the wearable device 101 may determine a position of the virtual microphone in the external space recognized using the camera. In an exemplary state of FIG. 6, the wearable device 101 may select, based on identifying the hand 610 indicated by the attribute assigned to the virtual microphone, a position of the virtual microphone using the position of the hand 610.

In an embodiment of FIG. 6, the wearable device 101 may display, based on identifying the hand 610 having a preset posture (e.g., a posture shown in FIG. 6) holding the virtual microphone, a visual object 630 representing the virtual microphone in the display area. For example, a position and/or a size of the visual object 630 within the display area of the wearable device 101 may be dependent on a position and/or a size of the hand 610 viewed through the display area. The wearable device 101 may calculate the position and/or size of the visual object 630 by executing the hand recognizer 272 of FIG. 2B. When the hand 610 cannot be tracked for more than a preset period, or the hand 610 is spaced apart from the wearable device 101 by more than a preset distance, the wearable device 101 may cease tracking the virtual microphone based on the hand 610, and/or may cease recording an audio signal based on the virtual microphone.

As shown in FIG. 6, in an embodiment in which a virtual microphone movable by the hand 610 is added, the wearable device 101 may move the virtual microphone based on a position and/or a gesture of the hand 610. For example, the wearable device 101 may identify an input indicating movement of the virtual microphone with another hand, based on a contact between the hand 610 and the other hand. Based on the input, the wearable device 101 may determine a position of the other hand as the position of the virtual microphone.

According to an embodiment, the wearable device 101 may select a shape of the visual object 630 representing the virtual microphone based on at least one attribute assigned to the virtual microphone. For example, in an exemplary state in which a virtual microphone having an attribute configured to be moved by a preset body part such as the hand 610 is added, the wearable device 101 may display the visual object 630 representing a real microphone in a form capable of being held by hand 610. The wearable device 101 may display, in the visual object 630, a visual object 632 for controlling recording of an audio signal based on a virtual microphone. Although the visual object 632 in a form of a button is illustrated, embodiments are not limited thereto.

According to an embodiment, the wearable device 101 may control recording of an audio signal using a gesture related to the visual object 630 representing the virtual microphone. For example, based on a gesture related to the visual object 632 included in the visual object 630 and having a form of a button, the wearable device 101 may initiate recording of an audio signal. Based on initiating of recording of an audio signal, the wearable device 101 may broadcast a signal including at least one attribute assigned to the virtual micro. The wearable device 101 may change an audio signal inputted through a microphone (e.g., the microphone 240 of FIG. 2A) in the wearable device 101, based on a position of the hand 610 overlapped with the visual object 630.

For example, changing the audio signal by the wearable device 101 may include changing the DoA indicated by the audio signal. In an embodiment of FIG. 6 in which a sound is generated from a user 620, an audio signal inputted through a microphone in the wearable device 101 may include the sound recorded based on the DoA between the wearable device 101 and the user 620. The wearable device 101 may change the DoA of the audio signal by using the DoA between the hand 610 and the user 620. When the wearable device 101 obtains an audio signal from an external electronic device different from the wearable device 101, the wearable device 101 may generate an audio signal including a sound having the DoA between the hand 610 and the user 620, by synthesizing the audio signal inputted through the microphone in the wearable device 101 and the audio signal obtained from the external electronic device.

As described above, the wearable device 101 according to an embodiment may display a visual object 630 representing the virtual microphone in the display area of the wearable device 101, based on an input indicating to add the virtual microphone. Based on at least one attribute assigned to the virtual microphone, the wearable device 101 may change a position and/or a size of the visual object 630. When the virtual microphone is configured to be movable by a preset body part such as the hand 610, the wearable device 101 may overlappingly display the visual object 630 with the hand 610. Based on a gesture of the hand 610, the wearable device 101 may initiate or cease recording of an audio signal based on the virtual microphone.

The wearable device 101 according to an embodiment may use an external electronic device different from the wearable device 101 to synthesize an audio signal. Hereinafter, an example of an operation in which the wearable device 101 obtains an audio signal from an external electronic device according to an embodiment will be described with reference to FIGS. 7 to 8.

FIG. 7 illustrates an example of an operation in which a plurality of wearable devices 101-1 and 101-2 obtain audio signals based on a virtual microphone, according to an embodiment. The first wearable device 101-1 and the second wearable device 101-2 of FIG. 1 may include a first wearable device 101-1 and a second wearable device 101-2 of FIG. 7. The first wearable device 101-1 and the second wearable device 101-2 of FIG. 7 may be an example of the wearable device 101 of FIGS. 1, 2A, or 2B. Referring to FIG. 7, an exemplary operation in which the first wearable device 101-1 synthesizes a first audio signal obtained from a microphone of the first wearable device 101-1 and a second audio signal obtained from the second wearable device 101-2 based on the exemplary case of FIG. 1 is described. In order to reduce repetition, descriptions overlapping that of FIG. 1 may be omitted.

Referring to FIG. 7, according to an embodiment, the first wearable device 101-1 may identify an input indicating to combine a virtual microphone to the third user 110-3. The at least one attribute assigned to the virtual microphone may include information indicating a position V of the third user 110-3. The first wearable device 101-1 may display a visual object 120 representing a virtual microphone in a display area. The first wearable device 101-1, which is an external electronic device including the second wearable device 101-2, may periodically transmit a signal including the at least one attribute (e.g., the position V of the third user 110-3). The first wearable device 101-1 may periodically transmit the signal in response to an input for initiating recording of an audio signal based on the virtual microphone.

According to an embodiment, the second wearable device 101-2 may receive a signal broadcasted from the first wearable device 101-1. The second wearable device 101-2 may identify at least one attribute assigned to a virtual microphone from the received signal. The second wearable device 101-2 may identify a virtual microphone added to a position V, based on the at least one attribute. The second wearable device 101-2 may identify the virtual microphone, based on obtaining a frame including the position V using the camera of the second wearable device 101-2 and/or identifying the third user 110-3 to which the virtual microphone is combined. The second wearable device 101-2 identifying the virtual microphone may display, in the display area, a visual object 710 for recording based on the virtual microphone. The second wearable device 101-2 may identify whether to record an audio signal based on the virtual microphone, by using the visual object 710. Referring to FIG. 7, the visual object 710 in a form of a pop-up window is illustrated, but the embodiment is not limited thereto. Displaying the visual object 710 by the second wearable device 101-2 may be performed conditionally based on a distance between a position P2 of the second wearable device 101-2 and the position V of the virtual microphone. For example, when the virtual microphone is spaced apart from the second wearable device 101-2 by a preset distance, the second wearable device 101-2 may not display the visual object 710 independently of the signal.

Referring to FIG. 7, in the visual object 710, the second wearable device 101-2 may display a visual object 712 (e.g., a button including a preset text such as "confirm") for initiating recording of an audio signal based on the virtual microphone, and/or a visual object 714 (e.g., a button including a preset text such as "cancel") for restricting the recording. Based on an input indicating to select the visual object 712, the second wearable device 101-2 may obtain an audio signal for the virtual microphone based on an audio signal inputted through a microphone in the second wearable device 101-2 and at least one attribute assigned to the virtual microphone. The second wearable device 101-2 may transmit the obtained audio signal to the first wearable device 101-1. Based on the input, the second wearable device 101-2 may display a visual object 120 representing a virtual microphone in a display area. A shape of the visual object 120 may be related to at least one attribute included in the signal received from the first wearable device 101-1.

According to an embodiment, in a state of performing recording based on the virtual microphone, the second wearable device 101-2 may identify, from a first audio signal inputted through a microphone of the second wearable device 101-2, an angle of arrival of a sound source of the first audio signal with respect to the position P2 of the second wearable device 101-2. It is assumed that the sound source is the third user 110-3, in an embodiment of FIG. 7 in which the virtual microphone is combined to the third user 110-3. In the assumption, the angle of arrival identified from the first audio signal may correspond to an azimuth of the third user 110-3 with respect to the position P2 of the second wearable device 101-2. The second wearable device 101-2 may change the angle of arrival for the first audio signal to an angle of arrival for the sound source at the position V coupled to the third user 110-3. For example, the second audio signal obtained by the second wearable device 101-2 by changing the first audio signal may include a sound of the third user 110-3 based on the angle of arrival at the position V. The second wearable device 101-2 may transmit, to the first wearable device 101-1, another signal including the second audio signal as a response to a signal broadcasted from the first wearable device 101-1. Using the other signal, the second wearable device 101-2 may transmit information (e.g., the position V of the virtual microphone) related to the virtual microphone identified by the second wearable device 101-2.

According to an embodiment, the first wearable device 101-1 may obtain a third audio signal for a virtual microphone disposed in the position V, based on the second audio signal included in the other signal transmitted from the second wearable device 101-2. The first wearable device 101-1 may obtain the third audio signal, based on a fourth audio signal obtained from a microphone of the first wearable device 101-1 as well as the second audio signal. For example, the first wearable device 101-1 may obtain the third audio signal by synthesizing the second audio signal and the fourth audio signal. The first wearable device 101-1 may obtain the fourth audio signal based on at least one attribute assigned to a virtual microphone. Obtaining the fourth audio signal from the microphone of the first wearable device 101-1 by the first wearable device 101-1 may be conditionally performed based on a distance between the position P1 of the first wearable device 101-1 and the position V of the virtual microphone. For example, when the first wearable device 101-1 is separated from the virtual microphone by a preset distance or less, the first wearable device 101-1 may obtain the fourth audio signal.

Referring to FIG. 7, in an embodiment in which a virtual microphone is added to the position V spaced apart from both the first wearable device 101-1 and the second wearable device 101-2, the first wearable device 101-1 may use the position V of the virtual microphone tracked by the second wearable device 101-2 to track the virtual microphone. For example, in a state of identifying the second wearable device 101-2 disposed closer to the position V of the virtual microphone than the first wearable device 101-1, the first wearable device 101-1 may identify the position V of the virtual microphone based on information received from the second wearable device 101-2. In the example, the second wearable device 101-2 may transmit, to the first wearable device 101-1, information indicating the position V of the virtual microphone identified by the second wearable device 101-2 together with an audio signal (e.g., the second audio signal) obtained based on the microphone of the second wearable device 101-2. The information may include a coordinate value of the position V identified by the second wearable device 101-2. The information may include a deviation (or a change amount) between the position V of the virtual microphone included in the signal broadcasted from the first wearable device 101-1 and a position V' of the virtual microphone identified by the second wearable device 101-2. The first wearable device 101-1 may identify the position V of the virtual microphone based on the information. The identified position V of the virtual microphone may be used for synthesizing (or rendering) an audio signal by the first wearable device 101-1.

Referring to FIG. 7, the first wearable device 101-1 may display a visual object 720 for controlling recording of an audio signal based on a virtual microphone in a display area. Based on an input to select the visual object 130 for guiding recording of the audio signal in the display area, the first wearable device 101-1 may display the visual object 720. In the visual object 720, the first wearable device 101-1 may display a preset text (e.g., "Stop recording?") that guides cessation of recording of the audio signal. In the visual object 720, the first wearable device 101-1 may display a visual object 722 (a button including a preset text such as "yes") to cease recording of an audio signal and a visual object 724 (a button including a preset text such as "no") to cease displaying of the visual object 720. In response to an input indicating to select the visual object 722, the first wearable device 101-1 may cease synthesizing (or rendering) an audio signal based on the virtual microphone. When receiving an audio signal related to the virtual microphone from the second wearable device 101-2, the first wearable device 101-1 may transmit, to the second wearable device 101-2, a signal indicating that synthesis of the audio signal is ceased based on the input. Based on the signal, the second wearable device 101-2 may cease obtaining the audio signal.

As described above, according to an embodiment, the first wearable device 101-1 may obtain an audio signal for a virtual microphone, by using an external electronic device such as the second wearable device 101-2. The first wearable device 101-1 may control recording of the audio signal based on the virtual microphone, by communicating with the second wearable device 101-2. The second wearable device 101-2 may display, to the second user 110-2 of the second wearable device 101-2, the visual object 710 for controlling recording of an audio signal, based on a signal transmitted from the first wearable device 101-1. Based on the visual object 710, the second wearable device 101-2 may identify an input for recording of an audio signal based on a virtual microphone.

As described above, a virtual microphone may be combined with a movable external object, such as the third user 110-3. Hereinafter, an example of an operation performed by a plurality of electronic devices including the first wearable device 101-1, based on movement of an external object combined with a virtual microphone will be described with reference to FIG. 8.

FIG. 8 illustrates an example of an operation in which a plurality of wearable devices 101 and 810 obtain audio signals based on a virtual microphone, according to an embodiment. The wearable device 101 of FIGS. 1, 2A, and 2B may include the plurality of wearable devices 101 and 810 of FIG. 8.

Referring to FIG. 8, exemplary states 801, 802, and 803 in which the wearable device 101 worn by a user 110 obtains an audio signal based on a virtual microphone moved sequentially along positions Va, Vb, and Vc are illustrated. The wearable device 101 may periodically broadcast a signal including at least one attribute assigned to a virtual microphone. Hereinafter, in terms of receiving the signal, the wearable device 810 may be referred to as an external electronic device 810. Hereinafter, it is assumed that the wearable device 101 identifies, from the user 110, an input for adding a virtual microphone described above with reference to FIGS. 5A to 5B. For example, the wearable device 101 may receive, from the user 110, an input for combining a virtual microphone with a hand of a user 820 of the external electronic device 810.

In a state 801 of FIG. 8, the wearable device 101 may identify the user 820 and/or a hand of the user 820 to which the virtual microphone is coupled, by using a camera (e.g., the camera 240 of FIG. 2A). A field-of-view (FoV) of the camera may at least partially overlap a FoV of the user 110, in a state that the user 110 wears the wearable device 101. The wearable device 101 may identify the hand within frames outputted from the camera based on an execution of the hand recognizer 272 and/or the external object recognizer 271 of FIG. 2B. The wearable device 101 may display a visual object 830 associated with a hand shown by the user 110 within the state. The visual object 830 may have a form indicated by at least one attribute assigned to a virtual microphone. In the state 801, the wearable device 101 may identify a position Va of the virtual microphone, based on the identified position of the hand. The wearable device 101 may display a visual object 830 representing a virtual microphone, based on the position Va. The position Va may be included in the hand of the user 110.

In the state 801 of FIG. 8, the wearable device 101 may obtain an audio signal using a microphone of the wearable device 101, in response to an input for initiating recording using a virtual microphone. The wearable device 101 may transmit, to the external electronic device 810, a signal related to the virtual microphone. The signal may include at least one attribute assigned to the virtual microphone and/or a parameter (e.g., a preset flag) indicating that an audio signal based on the virtual microphone is being recorded. The external electronic device 810 receiving the signal may control a microphone in the external electronic device 810 based on the signal. Based on an audio signal inputted through a microphone in the external electronic device 810, the external electronic device 810 may obtain an audio signal for a virtual microphone in the position Va. The external electronic device 810 may transmit the obtained audio signal to the wearable device 101. In the state 801, the wearable device 101 may obtain audio signals of each of a microphone of the wearable device 101 and a microphone of the external electronic device 810. The wearable device 101 may obtain an audio signal for a virtual microphone disposed in the position Va, by synthesizing the audio signals.

In the state 801 of FIG. 8, it is assumed that a user 820 including a hand combined with a virtual microphone has moved from a position P2 to a position P3. While the user 820 moves from the wearable device 101 to a position P3 farther than the position P2, a movement direction of the user 820 may be parallel to the front of the wearable device 101. Since the movement direction of the user 820 is parallel to the front of the wearable device 101, a hand of the user 820 may be covered by the back of the user 820 within a FoV of a camera facing the front of the wearable device 101. In a state 802 that the user 820 moves to the position P3, the wearable device 101 may identify that the hand of the user 820 combined with the virtual microphone is covered. In the state 802, the wearable device 101 may obtain, from the external electronic device 810, a position Vb of the virtual microphone, based on identifying that the user 820's hand is covered. For example, the wearable device 101 may identify the position Vb of the virtual microphone based on information transmitted from the external electronic device 810.

In the state 802 of FIG. 8, the external electronic device 810 may identify the position Vb of the virtual microphone, based on at least one attribute assigned to the virtual microphone. The external electronic device 810 may identify a position of a user 820 moved to the position P3 and a hand of the user 820, based on the at least one attribute periodically transmitted from the wearable device 101. Based on the identified position of the hand, the external electronic device 810 may identify the position Vb of the virtual microphone. The position Vb of the virtual microphone identified by the external electronic device 810 may have a coordinate based on a first spatial coordinate system having the position P3 of the external electronic device 810 as an origin. The wearable device 101 receiving the coordinates from the external electronic device 810 may obtain a coordinate for the position Vb of the virtual microphone in a second spatial coordinate system based on a difference between the first spatial coordinate system and the second spatial coordinate system having the position P1 of the wearable device 101 as an origin.

In the state 802 of FIG. 8, the wearable device 101 may synthesize audio signals obtained from both the microphone of the wearable device 101 and the microphone of the external electronic device 810, based on the position Vb of the virtual microphone identified by the external electronic device 810. For example, the wearable device 101 may obtain an audio signal for the position Vb by synthesizing (or rendering) the audio signals.

In the state 802 of FIG. 8, it is assumed that the user 820 including a hand combined with the virtual microphone has moved from the position P3 to the position P4. It is assumed that the user 820 stands toward the wearable device 101 in a state 803 after moving to the position P4 further than the position P3 of the wearable device 101. In the state 803, the wearable device 101 may identify the hand of the user 820 in a FoV of a camera. The wearable device 101 may display a visual object 830 representing a virtual microphone by overlapping with the identified hand. The wearable device 101 may identify a position Vc of the virtual microphone based on identifying the hand of the user 820.

In the state 803 of FIG. 8, when a distance between the position Vc of the virtual microphone and the position P1 of the wearable device 101 exceeds a preset threshold, the wearable device 101 may perform recording related to the virtual microphone independently of an audio signal obtained by using the microphone of the wearable device 101. For example, the wearable device 101 may select an audio signal inputted through the microphone of the external electronic device 810 among the microphone of the wearable device 101 and the microphone of the external electronic device 810. The wearable device 101 may render an audio signal for the position Vc of the virtual microphone based on the selected audio signal.

As described above, according to an embodiment, the wearable device 101 may track a position of a virtual microphone, based on movement of an external object (e.g., the user 820) combined with the virtual microphone. The wearable device 101 may synthesize one or more audio signals collected from the wearable device 101 and the external electronic device 810, based on the tracked position. The wearable device 101 and the external electronic device 810 may exchange information indicating a position of the virtual microphone calculated in each of the wearable device 101 and the external electronic device 810 together with the exchange of an audio signal for recording based on the virtual microphone. For example, in a state in which the wearable device 101 cannot independently calculate the position Vb of the virtual microphone 802, the wearable device 101 may identify the position Vb of the virtual microphone calculated by the external electronic device 810. The wearable device 101 according to an embodiment may synthesize an audio signal indicated to have been recorded by the virtual microphone, based on the movement of the virtual microphone. For example, based on the visual object 830 representing the virtual microphone, the wearable device 101 may provide a user experience replacing an actual microphone. By controlling recording of the audio signal related to the virtual microphone based on the visual object 830, the wearable device 101 may execute (or simulate) a function of the actual microphone based on augmented reality.

Hereinafter, an operation of the wearable device 101 and the external electronic device 810 receiving a signal broadcasted from the wearable device 101 according to an embodiment will be described with reference to FIGS. 9 to 11.

FIG. 9 illustrates an example of a signal flow diagram between a plurality of wearable devices 101-1 and 101-2, according to an embodiment. The first wearable device 101-1 and the second wearable device 101-2 of FIGS. 1 and/or 7 may include the first wearable device 101-1 and the second wearable device 101-2 of FIG. 9. The first wearable device 101-1 and the second wearable device 101-2 of FIG. 9 may be an example of the wearable device 101 of FIGS. 1, 2A and 2B. Operations of FIG. 9 may be performed by the wearable device 101 and/or the processor 210 of FIGS. 2A and 2B.

Referring to FIG. 9, in operation 910, according to an embodiment, the first wearable device 101-1 may receive an input for adding a virtual microphone. The first wearable device 101-1 may identify the input based on the operation described above with reference to FIGS. 5A to 5B. The first wearable device 101-1 may identify an input for assigning at least one attribute to a virtual micro. The first wearable device 101-1 may display a visual object (e.g., the visual object 120 of FIG. 1 and/or FIG. 7, the visual object 590 of FIG. 5B, the visual object 630 of FIG. 6, and/or the visual object 830 of FIG. 8) representing the virtual microphone based on an input for adding the virtual microphone. A shape of the visual object may be related to at least one attribute assigned to the virtual micro based on the input.

Referring to FIG. 9, in operation 920, according to an embodiment, the first wearable device 101-1 may broadcast a signal 925 including at least one attribute assigned to a virtual microphone. The signal 925 of FIG. 9 may include the first signal 141 of FIG. 1. The first wearable device 101-1 may identify an input for initiating recording related to the virtual microphone based on a visual object representing the virtual microphone. Based on the input, the first wearable device 101-1 may broadcast the signal 925. The first wearable device 101-1 may repeatedly transmit the signal 925. For example, the first wearable device 101-1 may repeatedly transmit the signal 925 based on a preset period. In an embodiment in which the first wearable device 101-1 tracks a position of the virtual microphone, the repeatedly transmitted signal 925 may include information indicating a position of the virtual microphone at a time point when the signal 925 is broadcasted.

Referring to FIG. 9, in operation 930, the second wearable device 101-2 according to an embodiment may display a visual object for recording based on a virtual microphone. The second wearable device 101-2 may display the visual object based on receiving the signal 925. The second wearable device 101-2 may determine whether to display the visual object, based on at least one attribute included in the signal 925. The at least one attribute included in the signal 925 may be related to a virtual microphone of operation 910. The second wearable device 101-2 may identify the virtual microphone based on the at least one attribute in a state of receiving the signal 925. Identifying the virtual microphone by the second wearable device 101-2 may include an operation of displaying a visual object representing the virtual microphone in a display area of the second wearable device 101-2. Identifying the virtual microphone by the second wearable device 101-2 may include an operation of calculating a coordinate of the virtual microphone within a spatial coordinate system indicating an external space recognized by the second wearable device 101-2.

According to an embodiment, the second wearable device 101-2 may display a visual object of operation 930 by performing the operation of the second wearable device 101-2 described above with reference to FIG. 7. For example, the visual object of operation 930 may include the visual object 710 of FIG. 7. The second wearable device 101-2 may display a visual object of operation 930 in a state in which a position of the virtual microphone identified by at least one attribute included in the signal 925 is less than or equal to a preset distance from the second wearable device 101-2.

Referring to FIG. 9, in operation 940, the first wearable device 101-1 according to an embodiment may obtain a first audio signal based on a position of the virtual microphone. The first wearable device 101-1 may perform operation 940 independently of repeatedly transmitting the signal 925. The first wearable device 101-1 may obtain a first audio signal of operation 940 from an audio signal inputted from a microphone of the first wearable device 101-1. The first wearable device 101-1 may change the audio signal inputted through the microphone of the first wearable device 101-1, based on at least one attribute assigned to the virtual microphone.

Referring to FIG. 9, in operation 950, the second wearable device 101-2 according to an embodiment may obtain a second audio signal based on an input related to a visual object of operation 930. The input may include an input selecting another visual object (e.g., a visual object 712 having a shape of a button of FIG. 7) included in the visual object of operation 930. In response to the input, the second wearable device 101-2 may obtain a second audio signal of operation 950 from an audio signal obtained using a microphone of the second wearable device 101-2. The second wearable device 101-2 may obtain the second audio signal of operation 950 by changing the audio signal inputted through the microphone of the second wearable device 101-2 using a position of the virtual microphone.

Referring to FIG. 9, in operation 960, the second wearable device 101-2 according to an embodiment may transmit, to the first wearable device 101-1, the second audio signal and the position of the virtual microphone identified by the wearable device 101-2. Based on obtaining the second audio signal based on the operation 950, the second wearable device 101-2 may transmit, to the first wearable device 101-1, a signal 965 including the obtained second audio signal. The signal 965 of FIG. 9 may include the second signal 142 of FIG. 1. The signal 965 may be transmitted by the second wearable device 101-2 as a response to the signal 925 transmitted from the first wearable device 101-1. The signal 965 may include the position of the virtual microphone calculated by the second wearable device 101-2.

Referring to FIG. 9, in operation 970, according to an embodiment, the first wearable device 101-1 may obtain a third audio signal for the virtual microphone by synthesizing the first audio signal and the second audio signal of operation 940 based on the position of the virtual microphone identified by at least one of a plurality of wearable devices. The first wearable device 101-1 may obtain the third audio signal by synthesizing (or rendering) the first audio signal and the second audio signal based on the position of the virtual microphone identified by the first wearable device 101-1 and/or the second wearable device 101-2. The third audio signal may indicate a vibration of the atmosphere within the position of the virtual microphone. For example, the first wearable device 101-1 may obtain the third audio signal for the virtual microphone.

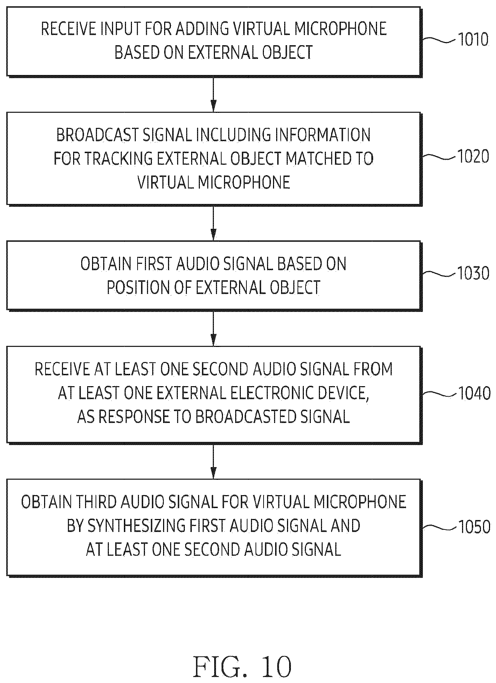

In an embodiment, the first wearable device 101-1 may obtain the third audio signal based on the operations of FIG. 9, before receiving an input indicating to cease recording based on the virtual microphone. The input indicating to cease the recording based on the virtual microphone may be received based on the operation described above with reference to the visual object 720 of FIG. 7. The first wearable device 101-1 may store the third audio signal obtained based on operation 970 in memory of the first wearable device 101-1 or transmit it to another external electronic device different from the first wearable device 101-1. Hereinafter, operations of the first wearable device 101-1 and the second wearable device 101-2 of FIG. 9 will be described with reference to each of FIGS. 10 to 11.

FIG. 10 illustrates an example of a flowchart of a wearable device according to an embodiment. The wearable device of FIG. 10 may be an example of the wearable device 101 of FIGS. 1, 2A, or 2B. Operations of FIG. 10 may be performed by the wearable device 101 and/or the processor 210 of FIGS. 2A and 2B. The wearable device of FIG. 10 may correspond to the first wearable device 101-1 of FIG. 9.

Referring to FIG. 10, in operation 1010, a wearable device according to an embodiment may receive an input for adding a virtual microphone based on an external object. The wearable device may perform operation 1010 of FIG. 10, similar to operation 910 of FIG. 9. The wearable device may receive the input based on an execution of the virtual microphone application 280 of FIGS. 2A and 2B and/or the virtual microphone manager 281 of FIG. 2B. In order to receive the input, the wearable device may display a UI (e.g., the UI illustrated in FIGS. 5A to 5B) for selecting a position of a virtual microphone in a display area. Through the UI, the wearable device may identify an external object to which the virtual microphone is to be coupled and/or attached.

Referring to FIG. 10, in operation 1020, a wearable device according to an embodiment may broadcast a signal including information for tracking an external object matched to a virtual microphone. Similar to operation 920 of FIG. 9, the wearable device may perform operation 1020 of FIG. 10. The wearable device may broadcast the signal based on an execution of the communication controller 284 of FIG. 2B. In a state that the communication controller 284 of FIG. 2B is executed, the wearable device may periodically transmit the signal through a communication link between an external electronic device and the wearable device. The signal may include a position of the virtual microphone tracked by the wearable device, and/or information (e.g., at least one attribute assigned to the virtual microphone) required to calculate the position.

Referring to FIG. 10, in operation 1030, the wearable device according to an embodiment may obtain a first audio signal based on a position of an external object. Similar to operation 940 of FIG. 9, the wearable device may perform operation 1030 of FIG. 10. The wearable device may obtain the first audio signal based on an execution of the virtual microphone position identifier 282 and/or the audio signal synthesizer 283 of FIG. 2B. The wearable device may obtain the first audio signal of operation 1030, by changing an audio signal inputted through a microphone (e.g., the microphone 260 of FIG. 2A) using the position of the virtual microphone.

Referring to FIG. 10, in operation 1040, the wearable device according to an embodiment may receive at least one second audio signal from at least one external electronic device, as a response to the broadcasted signal. The wearable device may receive the at least one second audio signal from the at least one external electronic device connected to the wearable device by the communication controller 284 of FIG. 2B. The at least one second audio signal may be recorded by at least one external electronic device. The at least one external electronic device may obtain the at least one second audio signal, based on a result of identifying the virtual microphone based on the signal of operation 1020.

Referring to FIG. 10, in operation 1050, a wearable device according to an embodiment may obtain a third audio signal for a virtual microphone by synthesizing a first audio signal and at least one second audio signal. Similar to operation 970 of FIG. 9, the wearable device may perform operation 1050 of FIG. 10. The wearable device may synthesize the first audio signal of operation 1030 and the at least one second audio signal of operation 1040, based on an execution of the audio signal synthesizer 283 of FIG. 2B. Based on the synthesis of the first audio signal and the at least one second audio signal, the wearable device may more accurately estimate a vibration of the atmosphere in the position of the virtual microphone.

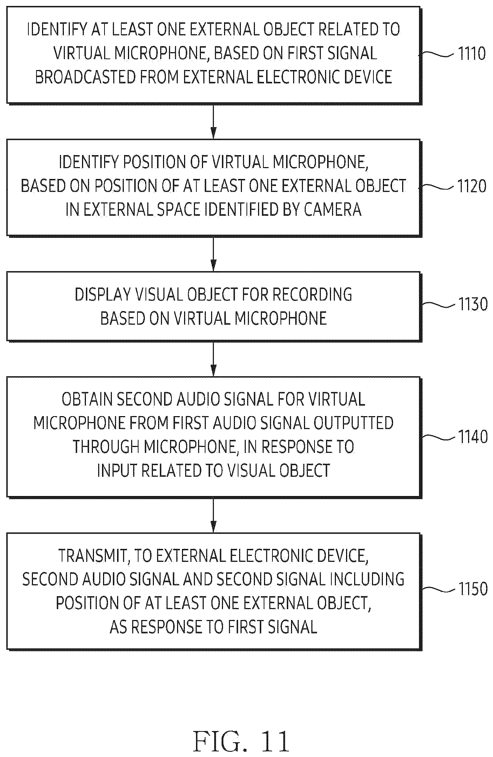

FIG. 11 illustrates an example of a flowchart of a wearable device according to an embodiment. The wearable device of FIG. 11 may be an example of the wearable device 101 of FIGS. 1, 2A, or 2B. Operations of FIG. 11 may be performed by the wearable device 101 and/or the processor 210 of FIGS. 2A and 2B. The wearable device of FIG. 11 may correspond to the second wearable device 101-2 of FIG. 9.

Referring to FIG. 11, in operation 1110, a wearable device according to an embodiment may identify at least one external object related to a virtual microphone, based on a first signal broadcasted from an external electronic device. The first signal of operation 1110 may include the signal 925 of FIG. 9 and/or the first signal 141 of FIG. 1. The at least one attribute may include information related to at least one of a behavior pattern of Table 1, a shape of a visual object representing a virtual microphone, or an external object used for calculating a position of the virtual microphone.

Referring to FIG. 11, in operation 1120, the wearable device according to an embodiment may identify a position of the virtual microphone based on a position of at least one external object in an external space identified by a camera. The wearable device may identify the position of the virtual microphone, based on an execution of the virtual microphone position identifier 282 of FIG. 2B. For example, in a state of identifying a virtual microphone combined with an external object based on the at least one attribute, the wearable device may identify the external object using a camera (e.g., the camera 240 of FIG. 2A). Based on the identified position of the external object, the wearable device may identify the position of the virtual microphone.

Referring to FIG. 11, in operation 1130, a wearable device according to an embodiment may display a visual object for recording based on a virtual microphone. The wearable device may perform operation 1130 of FIG. 11, similar to operation 930 of FIG. 9.

Referring to FIG. 11, in operation 1140, the wearable device according to an embodiment may obtain a second audio signal for a virtual microphone from a first audio signal inputted through a microphone, in response to an input related to a visual object. The wearable device may perform operation 1140 of FIG. 11 similar to operation 950 of FIG. 9.

Referring to FIG. 11, in operation 1150, a wearable device according to an embodiment may transmit, to an external electronic device, a second audio signal and a second signal including a position of at least one external object, as a response to a first signal. The wearable device may perform operation 1150 of FIG. 11 similar to operation 960 of FIG. 9. A second signal of operation 1150 may include the signal 965 of FIG. 9 and/or the second signal 142 of FIG. 1. The wearable device may transmit, to the external electronic device, information indicating a position of the virtual microphone identified based on operation 1120.

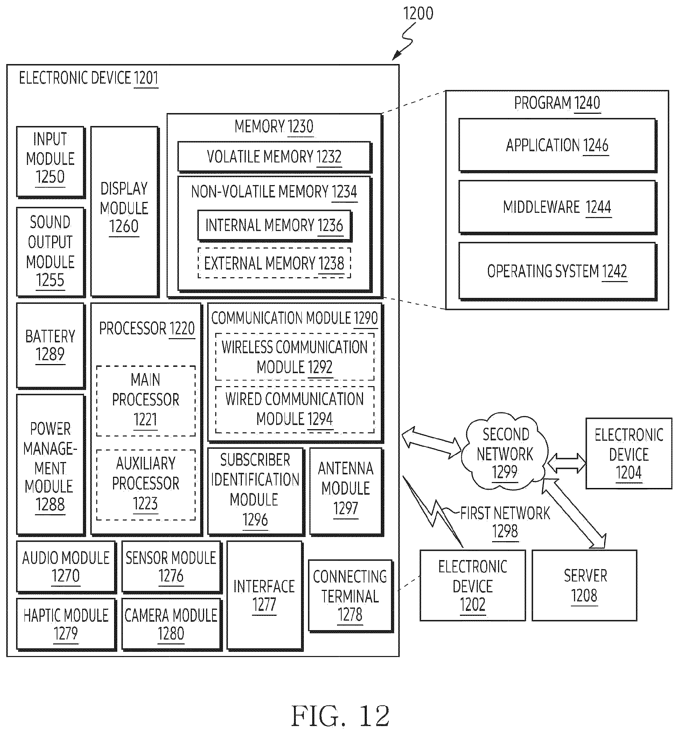

Hereinafter, different hardware included in the wearable device 101 according to an embodiment will be described with reference to FIG. 12.

FIG. 12 is a block diagram of an electronic device 101 in a network environment 100 according to an embodiment. The electronic device 101 of FIG. 12 may include the wearable device 101 of FIGS. 1, 2A, or 2B.

Referring to FIG. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module(SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, an HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

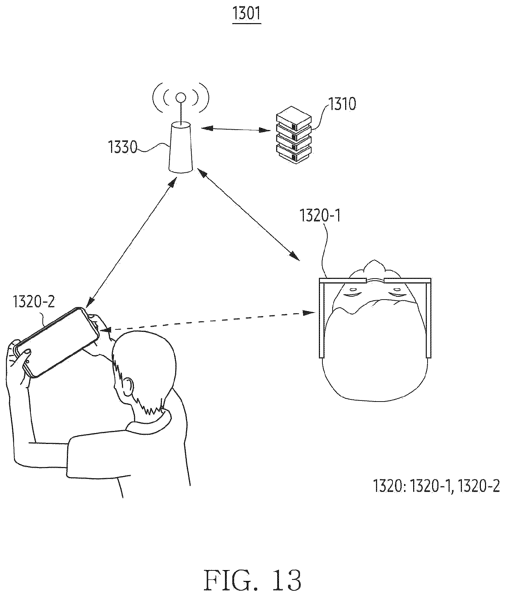

FIG. 13 is an exemplary diagram of a network environment related to a metaverse service. Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

FIG. 13 is an exemplary diagram of a network environment in which a metaverse service is provided through a server.

Referring to FIG. 13, a network environment 1301 may include a server 1310, a user terminal 1320 (e.g., a first terminal 1320-1 and a second terminal 1320-2), and a network connecting the server 1310 and the user terminal 1320. In the network environment 1301, the server 1310 may provide a metaverse service to the user terminal 1320. The network may be formed by at least one intermediate node 1330 including an access point (AP) and/or a base station. The user terminal 1320 may access the server 1320 through the network and output a user interface (UI) associated with a metaverse service to a user of the user terminal 1320. Based on the UI, the user terminal 1320 may obtain information to be inputted into the metaverse service from the user, or output information (e.g., multimedia content) associated with the metaverse service to the user.

In this case, the server 1310 provides a virtual space so that the user terminal 1320 may perform activities in the virtual space. In addition, the user terminal 1320 may represent information provided by the server 1310 to the user by installing an S/W agent to access the virtual space provided by the server 1310, or transmit information that the user wants to represent in the virtual space to the server. The S/W agent may be provided directly through the server 1310, downloaded from a public server, or embedded and provided when purchasing a terminal.

In an embodiment, the metaverse service may provide a service to the user terminal 1320 and/or a user by using the server 1310. The embodiment is not limited thereto, and the metaverse service may be provided through individual contacts between users. For example, in the network environment 1301, the metaverse service may be provided by a direct connection between the first terminal 1320-1 and the second terminal 1320-2, independently of the server 1310. Referring to FIG. 13, in the network environment 1301, the first terminal 1320-1 and the second terminal 1320-2 may be connected to each other through a network formed by at least one intermediate node 1330. In an embodiment in which the first terminal 1320-1 and the second terminal 1320-2 are directly connected, any one of the first terminal 1320-1 and the second terminal 1320-2 may perform a role of the server 1310. For example, a metaverse environment may be configured only with a device-to-device connection (e.g., a peer-to-peer (P2P) connection).

In an embodiment, the user terminal 1320 (or the user terminal 1320 including the first terminal 1320-1 and the second terminal 1320-2) may be made in various form factors, and it is characterized by including an output device for providing an image and/or sound to the user and an input device for inputting information into the metaverse service. An exemplary user terminal 1320 in various form factors may include a smartphone (e.g., the second terminal 1320-2), an AR device (e.g., the first terminal 1320-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1330) includes all of various broadband networks including 3G, 4G, and 5G and short-range networks (e.g., a wired network or a wireless network that directly connects the first terminal 1320-1 and the second terminal 1320-2) including Wi-Fi and BT.

In an embodiment, the user terminal 1320 of FIG. 13 may include the wearable device 101 of FIGS. 1, 2A to 2B and/or the electronic device 101 of FIG. 12.

In an embodiment, a method of obtaining an audio signal for a position by estimating a vibration of the atmosphere of the position separated from a microphone of a wearable device may be required. As described above, according to an embodiment, a wearable device (e.g., the wearable device 101 of FIGS. 2A to 2B) may comprise a camera (e.g., the camera 240 of FIG. 2A), communication circuitry (e.g., the communication circuitry 250 of FIG. 2A), a microphone (e.g., the microphone 260 of FIG. 2A), and a processor (e.g., the processor 210 of FIG. 2A). The processor may be configured to receive an input for combining a virtual microphone to a virtual object adjacent to the wearable device. The processor may be configured to broadcast, via the communication circuitry, a signal (e.g., the signal 925 of FIG. 9) including information to track the external object combined with the virtual microphone by the input. The processor may be configured to obtain, using a position of the external object identified based on frames obtained from the camera, a first audio signal from the microphone. The processor may be configured to obtain at least one second audio signal from at least one external electronic device through the communication circuitry. The at least one second audio signal may be transmitted from the at least one external electronic device as a response to the signal. The processor may be configured to obtain, by synthesizing the first audio signal and the at least one second audio signal using the position of the external object, a third audio signal with respect to the virtual microphone. According to an embodiment, the wearable device may use a virtual microphone to estimate the vibration of the atmosphere at a movable point (e.g., the point V in FIG. 1) within an external space separated from the microphone of the wearable device, or obtain an audio signal in which the estimated vibration is represented.

For example, the processor may be configured to receive, from the external electronic device, the at least one second audio signal recorded based on the position corresponding to the signal.

For example, the processor may be configured to obtain, from the external electronic device, the at least one second audio signal obtained using a microphone of the external electronic device and a position of the virtual microphone determined by the external electronic device.

For example, the processor may be configured to select, in an external space recognized using the camera, a position of the virtual microphone.

For example, the processor may be configured to change, based on the selected position, the first audio signal. The processor may be configured to change, based on the selected position, the at least one second audio signal. The processor may be configured to obtain, by synthesizing the changed first audio signal and the changed at least one second audio signal, the third audio signal.

For example, the processor may be configured to select, based on identifying the external object indicated by the input from the camera, the position of the microphone using a position of the external object in the external space.

For example, the wearable device may comprise a display (e.g., the display 230 of FIG. 2A). The processor may be configured to display a visual object (e.g., the visual object 120 of FIG. 1 and/or FIG. 7, the visual object 510 of FIG. 5A, the visual object 590 of FIG. 5B, the visual object 630 of FIG. 6, and the visual object 830 of FIG. 8) representing the virtual microphone in the display based on the input.

For example, the processor may be configured to change, based on identifying motion indicating movement of the visual object using the camera, the information indicating a position of the virtual microphone.

For example, the processor may be configured to display the visual object having a shape indicated by the input.

For example, the processor may be configured to initiate, based on identifying preset motion associated with the visual object using the camera, obtaining the first audio signal from the microphone.

For example, the processor may be configured to repeatedly broadcast, based on the preset motion, the signal based on a preset period using the communication circuitry.

As described above, according to an embodiment, a method of a wearable device may comprise identifying (e.g., operation 1110 of FIG.11), based on receiving a first signal broadcasted from an external electronic device through communication circuitry of the wearable device, information assigned to a virtual microphone. The method may comprise displaying (e.g., operation 1130 of FIG.11), based on identifying a position of the virtual microphone indicated by the information in an external space including the wearable device using a camera of the wearable device, a visual object for recording based on the virtual microphone in a display of the wearable device. The method may comprise obtaining (e.g., operation 1140 of FIG.11), in response to an input associated with the visual object, an audio signal outputted from a microphone of the wearable device. The method may comprise transmitting (e.g., operation 1150 of FIG.11), to the external electronic device through the communication circuitry, a second signal including the audio signal and the identified position as a response to the first signal.

For example, the obtaining may comprise obtaining, in a state displaying a visual object representing the virtual microphone based on the position in the display, the audio signal from the microphone.

For example, the obtaining may comprise obtaining an audio signal with respect to the virtual microphone by changing the audio signal based on the position.

For example, the obtaining may comprise changing, based on identifying an input indicating movement of the virtual microphone, the information based on a position of the virtual microphone moved based on the input.

For example, the obtaining may comprise identifying an external object indicated that the virtual microphone is attached by the information, using the camera. The method may comprise identifying, based on a position of the external object identified by the camera, a position of the virtual microphone.

For example, the transmitting may comprise transmitting the second signal including information indicating the position of the virtual microphone identified by the wearable device.

As described above, according to an embodiment, a method of a wearable device may comprise receiving (e.g., operation 1010 of FIG. 10) an input for combining a virtual microphone to a virtual object adjacent to the wearable device. The method may comprise broadcasting (e.g., operation 1020 of FIG. 10), via communication circuitry of the wearable device, a signal including information to track the external object combined with the virtual microphone by the input. The method may comprise obtaining, using a position of the external object identified based on frames obtained from a camera of the wearable device, a first audio signal from a microphone of the wearable device. The method may comprise obtaining (e.g., operations 1030 and 1040 of FIG.10) at least one second audio signal from at least one external electronic device through the communication circuitry. The at least one second audio signal may be transmitted from the at least one external electronic device as a response to the signal. The method may comprise obtaining (e.g., operation 1050 of FIG. 10), by synthesizing the first audio signal and the at least one second audio signal using the position of the external object, a third audio signal with respect to the virtual microphone.

For example, the obtaining the at least one second audio signal may comprise receiving, from the external electronic device, the at least one second audio signal recorded based on the position corresponding to the signal.

For example, the obtaining the at least one second audio signal may comprise obtaining, from the external electronic device, the at least one second audio signal obtained using a microphone of the external electronic device and a position of the virtual microphone determined by the external electronic device.

For example, the obtaining the at least one first audio signal may comprise selecting, in an external space recognized using a camera of the wearable device, a position of the virtual microphone.

For example, the obtaining the at least one first audio signal may comprise changing, based on the selected position, the at least one second audio signal. The obtaining the at least one third audio signal may comprise obtaining, by synthesizing the changed first audio signal and the changed at least one second audio signal, the third audio signal.

For example, the selecting may comprise selecting, based on identifying the external object indicated by the input from the camera, the position of the microphone using a position of the external object in the external space.

For example, the method may comprise displaying a visual object representing the virtual microphone in a display of the wearable device based on the input.

For example, the displaying may comprise changing, based on identifying motion indicating movement of the visual object using a camera of the wearable device, the information indicating a position of the virtual microphone.

For example, the displaying may comprise displaying the visual object having a shape indicated by the input.

For example, the obtaining the at least one first audio signal may comprise initiating, based on identifying preset motion associated with the visual obj ect using a camera of the wearable device, obtaining the first audio signal from the microphone.

For example, the broadcasting may comprise repeatedly broadcasting, based on the preset motion, the signal based on a preset period using the communication circuitry.

As described above, according to an embodiment, a wearable device (e.g., the wearable device 101 of FIGS. 2A to 2B) may include communication circuitry (e.g., the communication circuitry 250 of FIG. 2A), a microphone (e.g., the microphone 260 of FIG. 2A), a display (e.g., the display 230 of FIG. 2A), a camera (e.g., the camera 240 of FIG. 2A), and a processor (e.g., the processor 210 of FIG. 2A). The processor may be configured to identify, based on receiving a first signal (e.g., the first signal 141 of FIG. 1) broadcasted from an external electronic device through the communication circuitry, information assigned to a virtual microphone. The processor may be configured to display, based on identifying a position of the virtual microphone indicated by the information in an external space including the wearable device using the camera, a visual object (e.g., the visual object 710 of FIG. 7) for recording based on the virtual microphone in the display. The processor may be configured to obtain, in response to an input associated with the visual object, an audio signal outputted from the microphone. The processor may be configured to transmit, to the external electronic device through the communication circuitry, a second signal (e.g., the second signal 142 of FIG. 1) including the audio signal and the identified position as a response to the first signal.

For example, the processor may be configured to obtain, in a state displaying a visual object representing the virtual microphone based on the position in the display, the audio signal from the microphone.

For example, the processor may be configured to obtain an audio signal with respect to the virtual microphone by changing the audio signal based on the position.

For example, the processor may be configured to change, based on identifying an input indicating movement of the virtual microphone, the information based on a position of the virtual microphone moved based on the input.

For example, the processor may be configured to identify an external object indicated that the virtual microphone is attached by the information, using the camera. The processor may be configured to identify, based on a position of the external object identified by the camera, a position of the virtual microphone.

For example, the processor may be configured to transmit the second signal including information indicating the position of the virtual microphone identified by the wearable device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
a camera;
communication circuitry;
a microphone; and
a processor, wherein the processor is configured to:
receive an input for combining a virtual microphone to a virtual object adjacent to the wearable device;
broadcast, via the communication circuitry, a signal including information to track the external object combined with the virtual microphone by the input;
obtain, using a position of the external object identified based on frames obtained from the camera, a first audio signal from the microphone;
obtain at least one second audio signal from at least one external electronic device through the communication circuitry, wherein the at least one second audio signal is transmitted from the at least one external electronic device as a response to the signal; and
obtain, by synthesizing the first audio signal and the at least one second audio signal using the position of the external object, a third audio signal with respect to the virtual microphone.

2. The wearable device of claim 1, wherein the processor is configured to,
receive, from the external electronic device, the at least one second audio signal recorded based on the position corresponding to the signal.

3. The wearable device of claim 1, wherein the processor is configured to,
obtain, from the external electronic device, the at least one second audio signal obtained using a microphone of the external electronic device and a position of the virtual microphone determined by the external electronic device.

4. The wearable device of claim 1, wherein the processor is configured to,
select, in an external space recognized using the camera, a position of the virtual microphone.

5. The wearable device of claim 4, wherein the processor is configured to,
change, based on the selected position, the first audio signal;
change, based on the selected position, the at least one second audio signal; and
obtain, by synthesizing the changed first audio signal and the changed at least one second audio signal, the third audio signal.

6. The wearable device of claim 2, wherein the processor is configured to,
select, based on identifying the external object indicated by the input from the camera, the position of the microphone using a position of the external object in the external space.

7. The wearable device of claim 1, further comprising a display,
wherein the processor is configured to,
display a visual object representing the virtual microphone in the display based on the input.

8. The wearable device of claim 7, wherein the processor is configured to,
change, based on identifying motion indicating movement of the visual object using the camera, the information indicating a position of the virtual microphone.

9. The wearable device of claim 7, wherein the processor is configured to,
display the visual object having a shape indicated by the input.

10. The wearable device of claim 7, wherein the processor is configured to,
initiate, based on identifying preset motion associated with the visual object using the camera, obtaining the first audio signal from the microphone.

11. The wearable device of claim 10, wherein the processor is configured to, repeatedly broadcast, based on the preset motion, the signal based on a preset period using the communication circuitry.

12. A method of a wearable device, comprising:
identifying, based on receiving a first signal broadcasted from an external electronic device through communication circuitry of the wearable device, information assigned to a virtual microphone;
displaying, based on identifying a position of the virtual microphone indicated by the information in an external space including the wearable device using a camera of the wearable device, a visual object for recording based on the virtual microphone in a display of the wearable device;
obtaining, in response to an input associated with the visual object, an audio signal outputted from a microphone of the wearable device; and
transmitting, to the external electronic device through the communication circuitry, a second signal including the audio signal and the identified position as a response to the first signal.

13. The method of claim 12, wherein the obtaining comprises,
obtaining, in a state displaying a visual object representing the virtual microphone based on the position in the display, the audio signal from the microphone.

14. The method of claim 12, wherein the obtaining comprises,
obtaining an audio signal with respect to the virtual microphone by changing the audio signal based on the position.

15. The method of claim 12, wherein the obtaining comprises,
changing, based on identifying an input indicating movement of the virtual microphone, the information based on a position of the virtual microphone moved based on the input.
